# EUROPÄISCHE PATENTSCHRIFT

(11) **EP 2 874 252 B1**
(45) Veröffentlichungstag und Bekanntmachung des Hinweises auf die Patenterteilung: **28.08.2019**
(21) Anmeldenummer: 14193641.9
(22) Anmeldetag: 18.11.2014
(51) Int. Cl.: H02B 1/30

(54) **Montagebaugruppe, durch Montagebaugruppen gebildetes Integralgerüst und Verfahren zum Zusammenbauen des Integralgerüstes**
Installation assembly, integral framework formed with such installation assembly and method of assembling the integral framework
Module de montage, ossature intégré conçu par des modules de montage et procédé d'assemblage de l'ossature intégrée

(30) Priorität: 19.11.2013 DE 102013223554
(43) Veröffentlichungstag der Anmeldung: 20.05.2015
(73) Patentinhaber: Bombardier Transportation GmbH, 10785 Berlin (DE)
(72) Erfinder: Miller, Martin, 68167 Mannheim (DE); Harapin, Sabina, 67591 Mörstadt (DE)
(74) Vertreter: Patentanwälte Bressel und Partner mbB

(56) Entgegenhaltungen:
- DE-A1- 2 854 624
- DE-A1-102009 017 834
- DE-B3-102011 052 163
- DE-C1- 19 503 289
- DE-U1- 7 732 504
- US-A- 5 761 797
- US-A1- 2007 163 979

## Beschreibung

Die vorliegende Erfindung betrifft eine Montagebaugruppe für ein Integralgerüst, insbesondere zur Aufnahme von elektrischen Einrichtungen in einem Schienenfahrzeug, des Weiteren ein durch derartige Montagebaugruppen gebildetes Integralgerüst sowie ein Verfahren zum Zusammenbauen des Integralgerüstes.

Ein Gerüst für Schienenfahrzeuge kann beispielsweise zur Unterbringung von Hilfsvorrichtungen, die dem Betrieb von nicht unmittelbar für den Antrieb einer Lokomotive erforderlichen Einrichtungen dienen, oder zur Unterbringung von Hilfsvorrichtungen, die zur elektrischen Versorgung von derartigen Einrichtungen dienen, eingesetzt werden.

Elektrische Einrichtungen, beispielsweise elektrische Verteiler, Stromrichter und elektrische Hilfsbetriebe, werden typischerweise im Maschinenraum eines Schienenfahrzeuges untergebracht. Zur Unterbringung dieser Einrichtungen wird im Allgemeinen ein Gerüst vorgesehen, das mit Seitenwänden verkleidet ist, um beispielsweise einen Schutz der darin untergebrachten elektrischen Einrichtungen gegen Feuchtigkeit und Verschmutzungen zu schaffen. Derartige Gerüste dienen der mechanischen Halterung der elektrischen Einrichtungen. Hierzu stellen die Gerüste eine tragende Konstruktion dar. Die Gerüste sind aber auch in anderen Gebieten, in denen elektrische Einrichtungen gehalten werden, üblich.

Beispielsweise ist in DE 100 07 470 A1 ein Schaltschrank mit einem vertikale Rahmenprofile aufweisenden Rahmengestell beschrieben. Das Rahmengestell kann mittels Seitenverkleidungen umhüllt werden. Beabstandet zu den Seitenverkleidungen ist, dem Innenraum des Schaltschrankes zugewandt, eine Montagewand angeordnet, die mittels Haltern lösbar an dem Rahmengestell befestigt ist.

In EP 0 732 041 B1 ist ein Schaltschrank angegeben, der ein Teilrahmengestell sowie darin montierte verdrahtete Einbauten aufweist. Das Teilrahmengestell umfasst einen Grundrahmen aus vier Rahmenschenkeln sowie zwei weitere Rahmenschenkel, die senkrecht stehend an den unteren Ecken des Grundrahmens angebracht sind. Die Einbauten werden nach dem Zusammenbau am Einsatzort oder nach der Lieferung an den Einsatzort in das Teilrahmengestell eingesetzt und darin verdrahtet. Beispielsweise kann eine mit Installationsgeräten bestückte und verdrahtete Montageplatte in das Teilrahmengestell eingesetzt und mit dem Grundrahmen verbunden werden. Außerdem können an dem Grundrahmen zusätzliche Montageschienen angebracht werden, die auch als Führungen für ausziehbare Baugruppenträger ausgebildet sein können.

DE 10 2010 028 314 A1 offenbart ein Umrichtergerät mit einem Netzanschlussmodul und einer modularen Stromrichtereinheit. Diese beiden Komponenten sind nebeneinander auf einem Gerätesockel angeordnet und mit diesem lösbar befestigt. Sie weisen jeweils nur eine Seitenwand auf, die gemeinsam die Seitenwände des Umrichtergehäuses bilden. Deren Rückwände sind jeweils im seitenwandlosen Bereich lösbar miteinander befestigt. Eine haubenförmige Abdeckung ist mit den beiden Komponenten ebenfalls lösbar befestigt. Das zusammengesetzte Gehäuse weist eine ausreichende Steifigkeit auf, sodass es ohne die Verwendung eines Schaltschrankes an Aufstellorten verwendet werden kann.

Ferner ist in EP 2 508 407 B1 ein Gerüst, insbesondere für elektrische Einrichtungen in einem Schienenfahrzeug, beschrieben, das eine Mehrzahl von langgestreckten Profilelementen aufweist, die eine tragfähige Konstruktion bilden. Zumindest drei derartige Profilelemente sind an den Ecken miteinander verbunden. Die Profilelemente sind jeweils aus zwei oder mehreren Teilen zusammengesetzt. Die Profilelemente können rohrförmig oder nicht rohrförmig sein. Sie können durch Abkanten hergestellt werden.

Die bekannten Vorrichtungen zum Unterbringen von elektrischen Einrichtungen, beispielsweise im Maschinenraum von Schienentriebfahrzeugen, weisen zwar eine ausreichende mechanische Steifigkeit für die Aufnahme der Einrichtungen auf. Jedoch ist die Montage der Einrichtungen in diesen Vorrichtungen umständlich, zeitaufwändig und ergonomisch äußerst ungünstig. Für eine Montage werden die Vorrichtungen nämlich zuerst erstellt, sodass typischerweise für den elektrischen Ausbau in dem Elektroschrank lediglich verhältnismäßig kleine Türöffnungen freigehalten werden können. Nur teilweise können einzelne Baugruppen auf Montageplatten außerhalb des Schrankes vorgefertigt werden. Diese werden dann in den leeren Elektroschrank eingeführt und dort befestigt. Hierfür sind häufig aufwändige Hilfskonstruktionen erforderlich. Erst danach kann dann der vollständige elektrische Ausbau im Elektroschrank weitergeführt und abgeschlossen werden. Dies kann wegen der meist beengten Platzverhältnisse nur von einer Person erledigt werden. Daher ist insbesondere die Montage von schweren Bauelementen problematisch.

DE 10 2010 028 314 A1 gibt zwar an, dass für den dortigen Aufbau (Netzanschlussmodul und Stromrichtereinheit) kein genormter Schaltschrank mehr benötigt wird, sodass die Kosten dieses Zulieferteils eingespart werden können, und dass sich der Montageaufwand gegenüber einer Lösung mit separatem Schaltschrank verringere, da alle zu verschraubenden Teile frei zugänglich seien. Diese Lösung ist aber nicht universell einsetzbar, da lediglich diese zwei nebeneinander angeordneten Module, die die gleiche Größe haben, zu einem gemeinsamen Schrank zusammengefasst werden können.

DE10 2011 052 163 B3 beschreibt ein System aus einem Rahmenprofil und einem Wandelement, bei dem das Rahmenprofil und das Wandelement als separate Bauteile ausgebildet sind und das Wandelement in das Rahmenprofil einhängbar ist, wobei das Rahmenprofil eine erste Profilseite und eine zweite Profilseite, die senkrecht zueinander angeordnet sind, und eine dritte Profilseite und eine vierte Profilseite, die senkrecht zueinander angeordnet sind, aufweist. Eine Montageschiene ist in die durch zwei rechtwinklig zueinander stehende Profilseiten gebildete Innenaufnahme eingesetzt. Die Montageschiene weist zwei senkrecht zueinander stehende Profilwände auf, in die Befestigungsaufnahmen eingearbeitet sind. Von den Profilwänden sind Halteabschnitte rechtwinklig abgekantet, die auf den Profilseiten aufliegen. Die Halteabschnitte weisen Schlitze auf, die mit den Befestigungsaufnahmen der Profilseiten in Deckung gebracht werden können. Durch die Befestigungsaufnahme der gegenüber liegenden Profilwand kann eine Schraube durch den Schlitz hindurchgeführt und in die Befestigungsaufnahme eingeschraubt werden.

Gemäß US 2007/163979 A1 umfasst ein Gerüst zum Halten von Platten ein Paar extrudierter Streben an gegenüberliegenden Seiten des Gerüsts, die eine Montage einer Platte in jeder Höhe entlang der Streben ermöglichen. Jede Strebe umfasst einen vorderen Montageabschnitt, der einen Hohlraum mit einer vorderen vertikalen streifenförmigen Öffnung und ein Paar Flansche an seitlich gegenüberliegenden Seiten der Öffnung bildet und eine integrale Säule enthält. Eine Seite der Platte ist auf dem Befestigungsabschnitt durch eine Schraube abgesichert, die durch ein Loch in der Platte verläuft und die mit einer Mutter in Eingriff kommt, die in dem Hohlraum des Montageabschnitts und gegen die Flansche anliegt.

DE 10 2009 017 834 A1 betrifft ein Rahmengestell und einen darauf aufgebauten Schaltschrank für Starkstromenergieanlagen. Es sind Holme vorgesehen, die einen Außenholm mit einem offenen Profil aufweisen. Der nach innen weisende offene Bereich des Außenholms ist von einem Innenholm abgedeckt und mit diesem durch Nietverbindung verbunden, welcher gegen zwei Seiten des Außenholms außenseitig anliegt und zumindest eine als Stützfläche für eine Wandfläche dienende Abwinkelung aufweist.

Von daher liegt der vorliegenden Erfindung das Problem zugrunde, die Nachteile des Standes der Technik zu überwinden und insbesondere eine Konstruktion zu finden, die eine flexible Unterbringung verschiedener elektrischer Einrichtungen in einem Geschränk erlauben, wobei die Montage der elektrischen Einrichtungen einfach, schnell, von mehreren Personen gleichzeitig und in ergonomisch günstiger Arbeitshaltung bewältigt werden kann.

Das vorstehend angegebene Problem wird erfindungsgemäß durch eine Montagebaugruppe für ein Integralgerüst gemäß Anspruch 1 gelöst, das insbesondere zur Aufnahme von elektrischen Einrichtungen in einem Schienenfahrzeug eingesetzt werden kann.

Das vorstehend angegebene Problem wird erfindungsgemäß ferner durch ein Integralgerüst gelöst, das insbesondere zur Aufnahme von elektrischen Einrichtungen in einem Schienenfahrzeug vorgesehen ist. Das erfindungsgemäße Integralgerüst ist durch mindestens zwei erfindungsgemäße Montagebaugruppen gebildet. Die Montagebaugruppen sind in dem Integralgerüst miteinander verbunden und bilden Wand- oder Türelemente des Integralgerüstes. Die mindestens zwei Montagebaugruppen halten jeweils mindestens eine elektrische Einrichtung.

Das vorstehend angegebene Problem wird erfindungsgemäß ferner durch ein Verfahren zum Zusammenbauen des erfindungsgemäßen Integralgerüstes gebildet. Das Verfahren umfasst die folgenden Verfahrensschritte, wobei die angegebene Reihenfolge nicht zwingend die für den Zusammenbau einzuhaltende Reihenfolge angibt, sondern auch eine andere Reihenfolge erfindungsgemäß eingehalten werden kann und wobei einzelne der Verfahrensschritte gegebenenfalls auch gleichzeitig und andere nacheinander stattfinden können:
(a) Bereitstellen mindestens einer Montageplatte;
(b) Bereitstellen jeweils mindestens eines langgestreckten offenen Profilelements mit einem Längsschlitz; alternativ kann anstatt eines langgestreckten Profils auch eine oder mehrere Abkantungen am Rand der Montageplatte ausreichend sein; selbstverständlich ist es auch möglich, dass beide Alternativen (mit oder ohne Profilelement) an einer Montagebaugruppe oder zumindest in dem Integralgerüst gemeinsam realisiert sind.
(c) Befestigen des mindestens einen langgestreckten offenen Profilelements an der jeweiligen Montageplatte, indem das mindestens eine langgestreckte offene Profilelement an der jeweiligen Montageplatte der Länge nach angelegt und mit der Montageplatte verbunden wird, wobei der Längsschlitz des mindestens einen langgestreckten offenen Profilelements von der jeweiligen Montageplatte geschlossen wird;
(d) Montieren und vorzugsweise verdrahten jeweils mindestens einer elektrischen Einrichtung an der Montageplatte, wobei jeweils eine Montagebaugruppe gebildet wird; und
(e) Zusammenfügen und Verbinden von mindestens zwei vormontierten und vorzugsweise untereinander vorverdrahteten Montagebaugruppen unter Ausbildung des Integralgerüstes, wobei die mindestens zwei Montagebaugruppen jeweils Wand- oder Türelemente des Integralgerüstes bilden.

Weitere Merkmale der Erfindung ergeben sich aus den Patentansprüchen.

Mit der Erfindung wird somit erreicht, dass die Montagebaugruppen gemeinsam ein Geschränk bilden, in dem die elektrischen Einrichtungen untergebracht sind. Die Montagebaugruppen haben daher zwei Funktionen: Zum einen dienen sie dazu, die elektrischen Einrichtungen aufzunehmen, diese zu tragen (zu halten) und die Voraussetzungen dafür zu bieten, dass die elektrischen Verbindungen zwischen den elektrischen Einrichtungen hergestellt werden können, indem sie zum Beispiel die elektrischen Verbindungsleitungen aufnehmen und halten. Zum anderen dienen sie dazu, die Tragstruktur des Geschränks selbst zu bilden. Indem sie selbsttragend sind, bilden sie nicht nur das Geschränk sondern auch dessen Tragkonstruktion. Die Montageplatten sind um die Profilelemente konstruiert, sodass sie diese schließen. Dadurch wird eine hohe Biege- und Torsionssteifigkeit der Konstruktion erreicht.

Aufgrund dieses neuartigen Aufbaus des Geschränks können mehrere Personen gleichzeitig in ergonomisch günstiger Arbeitshaltung zunächst an dem elektrischen Ausbau des Geschränks arbeiten, da der Zusammenbau des Geschränks (Integralgerüstes) vorzugsweise erst nach der Montage und Verdrahtung der elektrischen Einrichtungen stattfindet. Daher ist es für die montierenden Personen nicht erforderlich, innerhalb des Gerüstes zu arbeiten, um die elektrischen Einrichtungen zu montieren und zu verdrahten. Es ist möglich, dass die Montageplatten beispielsweise auf einer ebenen (horizontalen) Arbeitsfläche, einem Arbeitstisch zum Beispiel, nebeneinander liegend angeordnet werden, um die elektrischen Einrichtungen zu montieren und zu verdrahten. Erst nach dem elektrischen Ausbau werden die fertiggestellten Montagebaugruppen zu dem Elektroschrank zusammengebaut. Indem mehrere Personen die Montage gleichzeitig vornehmen können, lässt sich die Montagezeit bei der Erstmontage deutlich verkürzen. Außerdem ist die Montage unter ergonomisch günstigen Bedingungen möglich. Die Endmontagereihenfolge ist weitestgehend frei wählbar.

Indem offene Profilelemente eingesetzt werden, ist das Gewicht des Gerüstes geringer als bei Verwendung von geschlossenen Profilen. Dadurch dass der Längsschlitz der offenen Profilelemente durch die jeweilige Montageplatte geschlossen wird, wird eine sehr stabile Konstruktion erreicht, denn die Montagebaugruppe erreicht dadurch eine ausreichend hohe Biege- und Torsionssteifigkeit.

In einer bevorzugten Weiterbildung der vorliegenden Erfindung sind die langgestreckten offenen Profilelemente jeweils durch eine erste Längswand, eine zweite Längswand, die in einer Ebene vorzugsweise senkrecht zu derjenigen der ersten Längswand liegt und die mit der ersten Längswand verbunden ist, d.h. in diese übergeht, ferner durch ein erstes rechtwinklig abgekantetes Flächenelement an einem Längsschenkel der ersten Längswand, das der zweiten Längswand gegenüberliegt, und durch ein zweites rechtwinklig abgekantetes Flächenelement an einem Längsschenkel der zweiten Längswand, das der ersten Längswand gegenüberliegt, gebildet. Der Längsschlitz ist zwischen der ersten rechtwinkligen Abkantung und der zweiten rechtwinkligen Abkantung ausgebildet. Somit weisen die Profilelemente vorzugsweise vier Seitenflächen auf. Der Querschnitt der Profilelemente kann (würde der durch den Längsschlitz unterbrochene Wandbereich ergänzt) vorzugsweise quadratisch sein. Er kann auch rechteckig sein. Grundsätzlich sind auch parallelogrammartige Querschnitte denkbar. Des Weiteren ist es auch möglich, dass die Profilelemente mehr als vier Seitenflächen aufweisen und komplexere Querschnitte bilden als Quadrate, Rechtecke oder Parallelogramme. Die Profilelemente können aus Flachmaterial durch Abkanten hergestellt werden.

Diese Profilelemente können an verschiedenen Stellen in dem Integralgerüst eingebaut werden. Indem Standard- (Wiederhol-)-Profilelemente mit vorgegebenem Profilquerschnitt verwendet werden, verringern sich die Kosten für die Erstellung des Integralgerüstes weiter, da geringere Lagerhaltungs- und andere Logistikkosten anfallen. Die Profilelemente können insbesondere an den Rändern der Montageplatten angeordnet sein. Beispielsweise ist es möglich, dass lediglich an einem Rand einer Montageplatte ein Profilelement vorgesehen wird. Alternativ können auch zwei Profilelemente, jeweils eines an einem von zwei einander gegenüberliegenden Rändern oder jeweils eines an einem von zwei zueinander benachbarten Rändern der Montageplatte, vorgesehen sein. Selbstverständlich ist es auch möglich, dass an drei Rändern oder an allen vier Rändern einer rechteckigen Montageplatte jeweils ein Profilelement angeordnet ist. Es ist auch möglich dass sich keines oder mehrere Profilelemente an derselben Seite der Montageplatte befinden: Montagebaugruppen, die im Integralgerüst benachbart zueinander angeordnet sind, weisen im Verbindungsbereich zwischen den beiden Baugruppen vorzugsweise lediglich ein Profilelement auf, da hiermit bereits die erforderliche Steifigkeit des Gerüstes gegeben ist, wenn diese beiden Montagebaugruppen miteinander verbunden sind. Dieses (gemeinsame) Profilelement ist dann vorzugsweise am Rand einer der die Baugruppen bildenden Montageplatten angeordnet. In einem Eckbereich, in dem drei Montagebaugruppen zusammentreffen, sind vorzugsweise lediglich drei Profilelemente vorgesehen, die sich in drei orthogonale Raumrichtungen erstrecken. Jeweils zwei dieser Profilelemente können zur Verbindung von zwei zueinander benachbarten Montagebaugruppen dienen, wobei diese Profilelemente an jeweils einem Rand einer der diese Baugruppen bildenden benachbarten Montageplatten angeordnet sind.

Gemäß den Ansprüchen weist die Montageplatte randseitig mindestens eine Abkantung auf. Die Montageplatte kann an den Abkantungen mit jeweils einem Profilelement verbunden werden, oder nur ein Teil der Abkantungen ist mit jeweils einem Profilelement versehen. Das Profilelement ist auf der Montageplatte derart angeordnet, dass die Montageplatte den Längsschlitz in dem Profilelement schließt. Beispielsweise kann an einem Rand oder an zwei einander gegenüberliegenden Rändern oder an zwei benachbarten Rändern oder an drei Rändern oder an allen vier Rändern jeweils eine Abkantung ausgebildet sein. Mehrere Abkantungen einer Montageplatte sind vorzugsweise zu derselben Seite der Montageplatte hin ausgerichtet. Sie bilden vorzugsweise jeweils einen rechten Winkel mit dem Plattenkorpus und sind bevorzugt parallel zu einem zugehörigen Rand der Montageplatte eingebracht. Die Profilelemente haben vorzugsweise eine Länge, die der Länge des Randes entspricht, an dem sich die Abkantung befindet. Die Abkantungen erstrecken sich ferner vorzugsweise über die gesamte Länge des jeweiligen Randes der Montageplatte. Allerdings können einzelne Profilelemente auch länger als der Rand der Montageplatte sein, beispielsweise wenn sich an eine durch diese erste Montageplatte gebildete erste Montagebaugruppe eine benachbarte zweite Montagebaugruppe des Integralgerüstes anschließt, die über die durch die erste Montageplatte gebildete erste Montagebaugruppe übersteht. In diesem Falle erstreckt sich das Profilelement der ersten Montageplatte vorzugsweise über die gesamte Länge der benachbarten zweiten Montagebaugruppe. Ferner kann es aus Gründen der Stabilität des Integralgerüstes vorteilhaft sein, wenn der überstehende Teil des langgestreckten offenen Profilelements durch ein langgestrecktes Winkelelement geschlossen ist, sodass zusammen mit dem langgestreckten offenen Profilelement insgesamt ein geschlossenes Profil entsteht. Dieses Winkelelement wird an das offene Profilelement angelegt, sodass es den Längsschlitz des Profilelements schließt, und mit dem Profilelement verbunden. Dadurch wird eine ausreichende Biege- und Torsionssteifigkeit erzielt.

Die Breite der Abkantungen der Montageplatten richtet sich vorzugsweise nach den Abmessungen der Profilelemente: ein Profilelement ist gemäß den Patentansprüchen in einer Hohlkehle der Montageplatte an deren randseitiger Abkantung eingepasst angeordnet, sodass das Profilelement parallel zu der Abkantung zweiseitig an der Montageplatte anliegt, nämlich sowohl am Montageplattenkorpus als auch an der Abkantung der Montageplatte. Indem das Profilelement an diesen zwei Seiten an der Montageplatte anliegt und dort mit dieser verbunden ist, wird eine sehr hohe Biege- und Torsionssteifigkeit der Montagebaugruppe erreicht. Vorzugsweise ist die Abkantung so breit, dass sie mit dem Profilelement an der an ihr anliegenden Seite vollständig überlappt, d.h. an einem Flachbereich des Profilelements vollständig anliegt. Dadurch wird eine maximale Steifigkeit erreicht. Die Breite der Abkantung der Montageplatte ist vorzugsweise ungefähr oder genauso groß wie die Breite der anliegenden Seite des Profilelements.

Je nach Aufbau eines vierseitigen Profilelements mit rechtwinklig zueinander angeordneten Seitenwänden kann der Längsschlitz in einer ersten Variante zum Eckbereich der Hohlkehle oder in einer zweiten Variante entweder zu der Abkantung oder zu dem Montageplattenkorpus hin ausgerichtet sein. Ersteres ist dann bevorzugt, wenn das Profilelement derart aufgebaut ist, dass es zwei zueinander benachbarte Wandelemente, die sich über jeweils eine gesamte Seite des Profilelements erstrecken, und zwei weitere Wandelemente, die sich jeweils nur über einen Teil der jeweiligen Seiten des Profilelements erstrecken, aufweist, sodass der Längsschlitz entlang einer gedachten Profilelement-Kante verläuft, d.h. in einem Eckbereich des Querschnittes liegt. Letzteres ist dann bevorzugt, wenn sich der Längsschlitz in einer Seite des Profilelements befindet, d.h. das Profilelement drei zueinander benachbarte Wandelemente, die sich über jeweils eine gesamte Seite des Profilelements erstrecken, und zwei weitere schmale Wandelemente in derselben (vierten) Wandebene aufweist, die von zwei einander gegenüberliegenden der sich jeweils über eine gesamte Seite erstreckenden Wandelemente ausgehen, wobei sich der Längsschlitz dazwischen befindet.

Die Profilelemente sind in der Hohlkehle vorzugsweise derart angeordnet, dass die den Längsschlitz aufweisende(n) Seitenfläche(n) der Profilelemente am Montageplattenkorpus anliegt/en.

Durch geeignete Ausbildung der Abkantungen können Fugen zwischen den Montagebaugruppen im zusammengebauten Zustand des Integralgerüstes verschlossen werden. Beispielsweise können Abkantungen von zwei im rechten Winkel miteinander verbundenen Montagebaugruppen in einem Eckbereich derart ausgebildet sein, dass die eine Abkantung in dem Überlappungsbereich exakt über die andere greift. Durch Verbinden der Abkantungen miteinander in diesem Überlappungsbereich, beispielsweise durch Nieten, wird zusätzlich eine erhöhte Steifigkeit des Gerüstes erzielt.

In einer weiteren bevorzugten Weiterbildung der vorliegenden Erfindung sind die Montageplatte und das mindestens eine Profilelement unlösbar miteinander verbunden. Alternativ kann auch eine lösbare Verbindung gewählt werden. Dasselbe gilt auch für Verbindungen des Profilelements mit einem Winkelelement und für Verbindungen von Abkantungen miteinander und für Verbindungen eines nicht mit einem Profilelement versehenen Randbereiches einer Montageplatte mit einem Profilelement einer benachbarten Montagebaugruppe sowie für Verbindungen von nicht mit Profilelementen versehenen Randbereichen zweier Montageplatten von benachbarten Montagebaugruppen miteinander.

In einer weiteren bevorzugten Weiterbildung der vorliegenden Erfindung ist die unlösbare Verbindung durch Nieten gebildet. Diese Verbindung kann entweder über die Seitenfläche des Profilelements, an der sich kein Längsschlitz befindet, oder an der den Längsschlitz aufweisenden Seitenfläche mit der Montageplatte und/oder dem Winkelelement hergestellt sein. Selbstverständlich ist es auch möglich, dass die Verbindung über beide Seitenflächen hergestellt wird.

Alternativ kann die unlösbare Verbindung auch mittels anderer Methoden hergestellt sein, beispielsweise mit einem stoffschlüssigen Verfahren, wie Schweißen.

Falls eine lösbare Verbindung gewählt wird, kann dies beispielsweise durch Schrauben realisiert sein.

Zur Ausbildung einer der Montagebaugruppen als Türelement des Integralgerüstes kann die hierfür vorgesehene Montagebaugruppe gemäß einer weiteren bevorzugten Weiterbildung der vorliegenden Erfindung ferner mindestens ein Scharnierelement zur Anlenkung an eine weitere (benachbarte) Montagebaugruppe im Integralgerüst aufweisen. Vorzugsweise sind zur Anlenkung eines Türelements mindestens zwei, vorzugsweise drei oder vier, Scharnierelemente vorgesehen, die an den Rändern der durch die Gelenkverbindung zu verbindenden Montageplatten und über deren Länge vorzugsweise möglichst gleichmäßig verteilt angeordnet und mit den entsprechenden Montageplatten verbunden sind.

Zur Montage des Integralgerüstes aus den Montagebaugruppen, die bevorzugt bereits mit allen elektrischen Einrichtungen sowie mit den diese Einrichtungen verbindenden Verkabelungen versehen sind, können die Montagebaugruppen miteinander verbunden werden. Zum Verbinden von zwei zueinander benachbarten Montagebaugruppen (erste und zweite Montagebaugruppe) kann beispielsweise das Profilelement, das an der Montageplatte der ersten Montagebaugruppe befestigt ist, randseitig mit der Montageplatte der zweiten Montagebaugruppe beispielsweise durch Nieten verbunden werden. Die Montageplatte der zweiten Montagebaugruppe weist in diesem Falle an diesem Rand vorzugsweise kein Profilelement auf.

In einer weiteren bevorzugten Weiterbildung der vorliegenden Erfindung weist das Integralgerüst zusätzlich ein Basisgerüst zur Aufstellung des Integralgerüstes auf einer Bodenfläche auf. Das Basisgerüst kann beispielsweise durch die langgestreckten offenen Profilelemente sowie gegebenenfalls durch Fußelemente gebildet sein, wobei die Fußelemente vorzugsweise die Profilelemente zu einem Rahmengestell miteinander verbinden. Soweit sie nicht mit benachbarten Montagebaugruppen zu verbinden und soweit daher deren Längsschlitze zu schließen sind, können die Profilelemente durch Winkelelemente geschlossen werden, um eine ausreichende Biege- und Torsionssteifigkeit des Basisgerüstes zu erreichen.

Die Fußelemente des Basisgerüstes können durch Verbindungselemente gebildet sein. Derartige Verbindungselemente sind beispielsweise in EP 2 508 407 B1 angegeben. Die dortigen als Fußelemente vorgesehenen Verbindungselemente sind dreiteilig ausgebildet. Alternativ können die Verbindungselemente auch zweiteilig ausgebildet sein, indem sie jeweils ein Fußteil mit einem bodenseitigen (horizontalen) Fußflansch und ein aufrechtstehendes Montageteil aufweisen. Über die Fußteile und die Montageteile sind die beiden Verbindungselemente miteinander verbindbar. Vorzugsweise ist das Montageteil des einen Verbindungselements flach und aufrechtstehend und sowohl an einem horizontalen Profilelement des Basisgerüstes als auch an einem von diesem gegebenenfalls nach oben verlaufenden weiteren Profilelement von innen anlegbar und mit diesen beiden Profilelementen jeweils verbindbar, sodass eine Verbindung dieser beiden Profilelemente miteinander herstellbar ist. Vorzugsweise ist das aufrecht stehende Montageteil des anderen Verbindungselements abgewinkelt und sowohl an das eine horizontale Profilelement des Basisgerüstes als auch an ein weiteres dazu benachbartes horizontales Profilelement des Basisgerüstes von innen anlegbar und mit diesen beiden Profilelementen verbindbar. Somit sind die Fußelemente in einer weiteren bevorzugten Weiterbildung der vorliegenden Erfindung an der Innenseite von langgestreckten offenen Profilelementen befestigt.

Gleichermaßen können sich dreiteilige oder zweiteilige Verbindungselemente auch an oberen Ecken des Integralgerüstes innenseitig befinden, die an oberen Profilelementen innenseitig befestigt sind und ferner beispielsweise nach oben ragende Aufhängeelemente anstelle von nach unten weisenden Fußteilen aufweisen. Die Aufhängeelemente können insbesondere durch ein oberes Wandelement bzw. eine obere Montageplatte hindurch reichen.

Ferner kann das Integralgerüst mindestens ein durch Scharnierelemente angelenktes Türelement aufweisen.

Vor dem Zusammenfügen und Verbinden können die Montagebaugruppen des Integralgerüstes zunächst noch nebeneinander, beispielsweise auf der horizontalen Arbeitsfläche, liegen. Falls Türelemente vorhanden sind, können diese außenliegend angeordnet sein. Zum Verbinden werden die Montagebaugruppen in die gewünschte Raumlage relativ zueinander platziert und miteinander verbunden. Nach dem Zusammenfügen und Verbinden der Montagebaugruppen miteinander kann es erforderlich sein, dass das Integralgerüst aufgestellt wird. Denn vorzugsweise liegt es zunächst in der horizontalen Lage, beispielsweise auf der Arbeitsfläche.

Gemäß einer weiteren bevorzugten Weiterbildung umfasst das erfindungsgemäße Verfahren zum Zusammenbau des Integralgerüstes den zusätzlichen Verfahrensschritt, dass die jeweils mindestens eine elektrische Einrichtung der mindestens zwei Montagebaugruppen miteinander verkabelt werden. Vorzugsweise werden die elektrischen Einrichtungen der Montagebaugruppen verkabelt, bevor sie zu dem Integralgerüst zusammengesetzt werden. Eine Möglichkeit besteht darin, dass zumindest ein Teil der Verkabelung bereits vor dem Montieren der elektrischen Einrichtungen hergestellt wird und ein anderer Teil nach deren Montage, gegebenenfalls auch erst nach dem Zusammenfügen und Verbinden einzelner oder aller Montagebaugruppen miteinander. Eine andere Möglichkeit besteht darin, dass die Verkabelung erst nach dem Zusammenfügen und Verbinden der Montagebaugruppen miteinander hergestellt wird.

Zur näheren Veranschaulichung der Erfindung dienen die nachfolgend beschriebenen Figuren. Diese stellen lediglich exemplarische Ausführungsbeispiele dar und beschränken die Tragweite der hier beschriebenen und beanspruchten Erfindung in keiner Weise.
- Fig. 1a: zeigt eine Querschnittsdarstellung eines Ausschnittes von zwei mit einem Profilelement verbundenen Montageplatten;
- Fig. 1b: zeigt eine Querschnittsdarstellung eines Ausschnittes von zwei miteinander verbundenen Montageplatten ohne Verwendung eines Profilelements;
- Fig. 2: zeigt eine isometrische Darstellung eines Abschnittes eines Profilelements;
- Fig. 3: zeigt ein Niederspannungsgerüst, das gemäß der vorliegenden Erfindung aufgebaut ist, im montierten Zustand in isometrischen Darstellungen; (a) Vorderansicht; (b) Rückansicht;

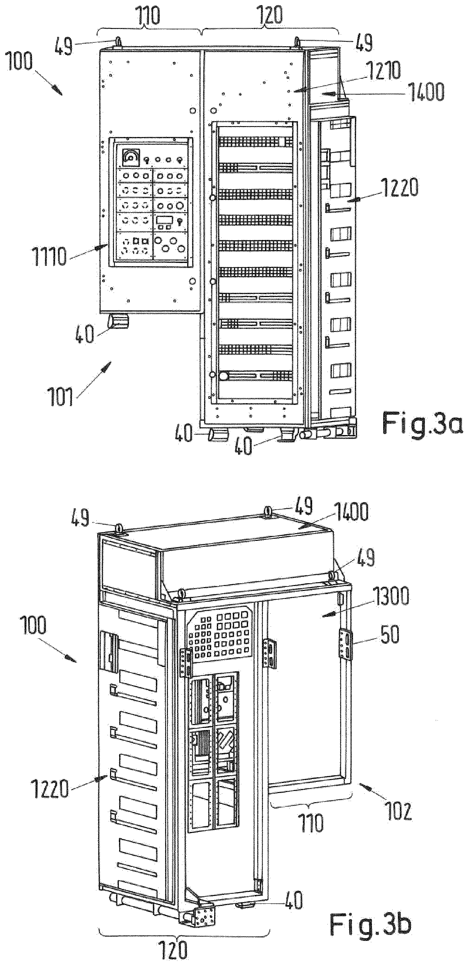

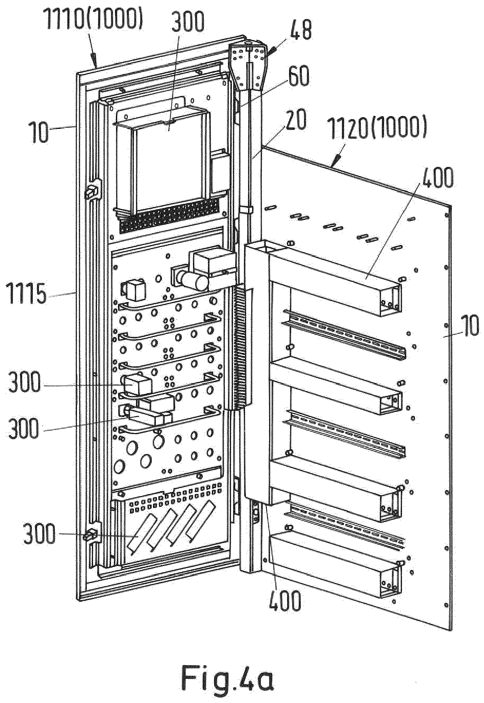

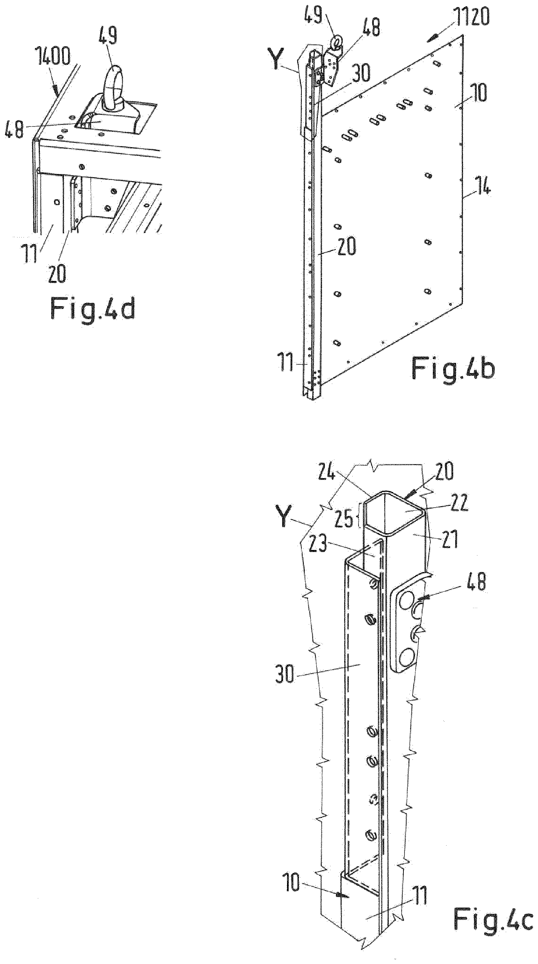

- Fig. 4: zeigt eine eine linke Seitenwand bildende Montagebaugruppe mit Kabelkanälen sowie eine eine links daran angelenkte linke vordere Tür bildende Montagebaugruppe mit elektrischen Einrichtungen für das in Fig. 3 gezeigte Niederspannungsgerüst; (a) in einer isometrischen Darstellung schräg von hinten; (b) nur linke Seitenwand ohne Kabelkanäle in einer isometrischen Darstellung schräg von vorne; (c) Ausschnitt Y von Fig. 4b; (d) Ausschnitt der linken vorderen oberen Ecke des Niederspannungsgerüstes gemäß Fig. 3 mit einer an einem Profilelement der die linke Seitenwand bildenden Montagebaugruppe befestigten Aufhängeöse;
- Fig. 5: zeigt eine eine rechte Seitenwand bildende Montagebaugruppe mit Kabelkanälen und elektrischen Einrichtungen und eine eine rechte vordere Tür bildende Montagebaugruppe mit elektrischen Einrichtungen für das in Fig. 3 gezeigte Niederspannungsgerüst, (a) in einer isometrischen Darstellung schräg von hinten; (b) nur rechte Seitenwand ohne Kabelkanäle und elektrische Einrichtungen in einer isometrischen Darstellung schräg von vorne; (c) Ausschnitt X von Fig. 5b;
- Fig. 6: zeigt eine eine Rückwand bildende Montagebaugruppe mit Kabelkanälen und elektrischen Einrichtungen für das in Fig. 3 gezeigte Niederspannungsgerüst; (a) in einer isometrischen Darstellung mit elektrischen Einrichtungen und Kabelkanälen von vorne; (b) in einer isometrischen Darstellung schräg von hinten; (c) Ausschnitt X von Fig. 6b; (d) Ausschnitt Y von Fig. 6b;
- Fig. 7: zeigt eine eine oben angeordnete haubenförmige Abdeckung bildende Montagebaugruppe für das in Fig. 3 gezeigte Niederspannungsgerüst; (a) in einer isometrischen Darstellung schräg von vorne, etwas von unten gesehen; (b) in einer isometrischen Darstellung schräg von unten und vorne, wobei die Unterseite der Abdeckung nach oben weist; (c) Ausschnitt X von Fig. 7b; (d) Ausschnitt Y von Fig. 7b;
- Fig. 8: zeigt eine ein Basisgerüst bildende Boden-Montagebaugruppe für das in Fig. 3 gezeigte Niederspannungsgerüst; (a) rechte Teil-Montagebaugruppe des Basisgerüstes in einer isometrischen Darstellung schräg von vorne; (b) linke Teil-Montagebaugruppe des Basisgerüstes in einer isometrischen Darstellung schräg von vorne; (c) Bodenmontagebaugruppe ohne elektrische Einrichtungen in einer isometrischen Darstellung schräg von vorne; (d) Ausschnitt X von Fig. 8c; (e) Ausschnitt Y von Fig. 8c; (f) Verbindungselement des Basisgerüsts in einer isometrischen Explosionsdarstellung;
- Fig. 9: zeigt eine eine Zwischenwand bildende Montagebaugruppe für das in Fig. 3 gezeigte Niederspannungsgerüst in einer isometrischen Darstellung schräg von vorne;
- Fig. 10: zeigt einen Ablauf des Verfahrens zum Zusammenbau des Niederspannungsgerüstes;
- Fig. 11: zeigt den Vorgang der Montage der bereits bestückten Montagebaugruppen zum Integralgerüst gemäß Fig. 3;
- Fig.12: zeigt den Ablauf des Zusammenbaus von zwei Montagebaugruppen zu einem Integralgerüst ausschnittsweise in einer Querschnittsdarstellung; (a) Platzierung der beiden Montagebaugruppen nebeneinander zum nachfolgenden Zusammenbau; (b) Bewegen der beiden Montagebaugruppen in die in dem Integralgerüst vorgesehene Relativlage zueinander; (c) Anordnung der Montagebaugruppen im zusammengebauten Niederspannungsgerüst.

In den Figuren bezeichnen gleiche Bezugszeichen Elemente mit derselben Funktion oder dieselben Elemente.

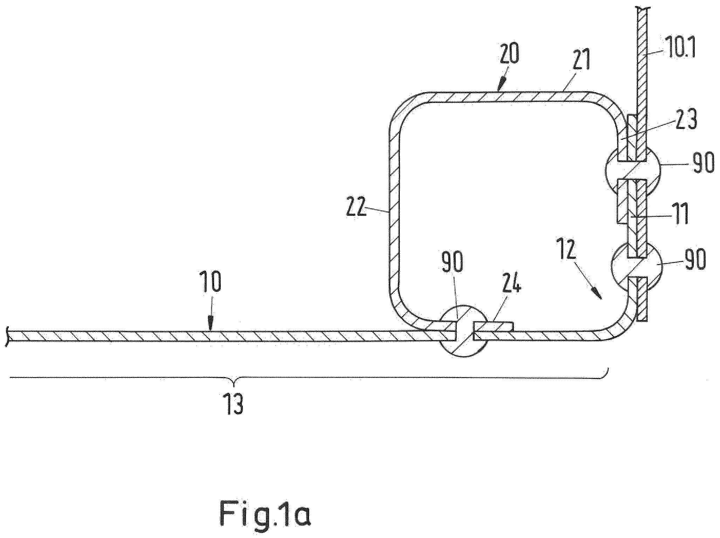

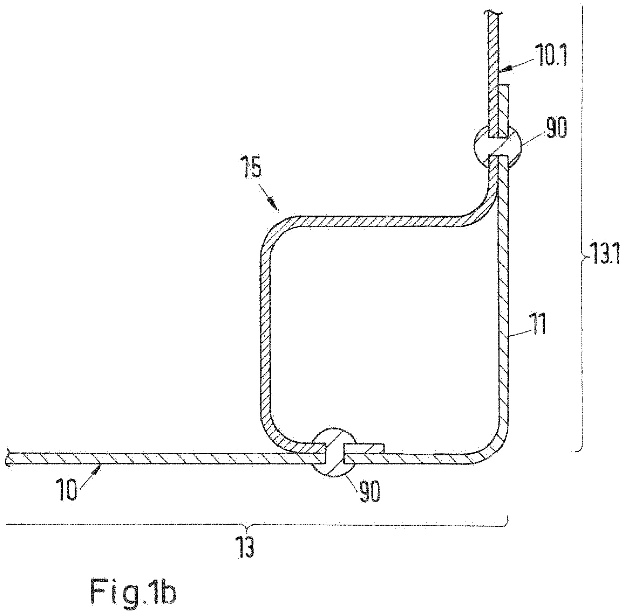

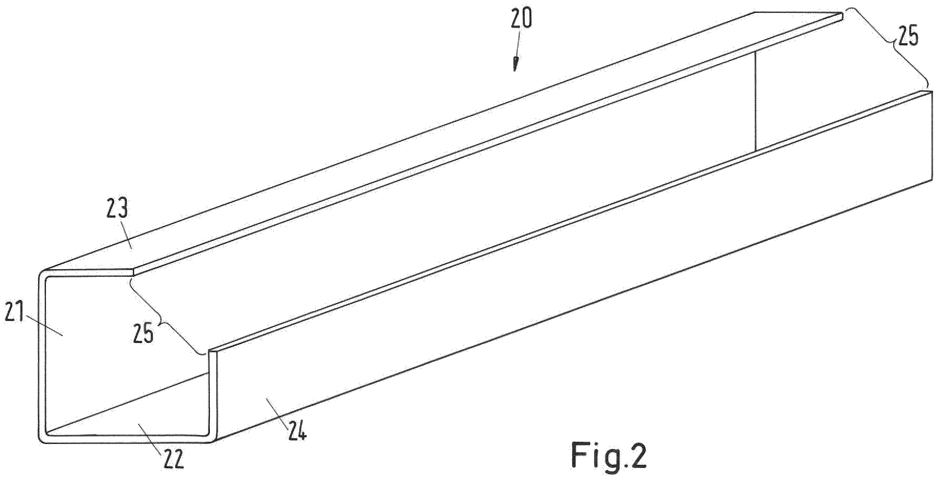

Eine erfindungsgemäße Verbindung von Montageplatten 10, 10.1 mit einem langgestreckten offenen Profilelement 20 ist in Fig. 1a ausschnittsweise dargestellt. Die in der Darstellung nach links verlaufende Montageplatte 10 setzt sich jenseits der Darstellung nach links fort. Ebenso setzt sich die in der Darstellung nach oben verlaufende Montageplatte 10.1 jenseits der Darstellung nach oben fort. Das Profilelement 20 ist in einer isometrischen Darstellung in Fig. 2 wiedergegeben. Fig. 2 zeigt ebenfalls nur einen Abschnitt des Profilelements 20. Das Profilelement 20 kann daher länger sein als dargestellt. Eine Querschnitts-Seitenfläche des Profilelements 20 hat beispielsweise eine Breite im Bereich von 20 bis 50 mm. Die Verbindung zweier benachbarter Montageplatten kann auch ohne die Verwendung eines langgestreckten Profils erfolgen. Hierzu wird auf Fig. 1b verwiesen, wo die Verbindung von zwei Montageplatten 10, 10.1 dargestellt ist. In diesem Falle weist die erste Montageplatte 10 eine Abkantung 11 und die zweite Montageplatte 10.1 eine randseitige Profilierung 15 auf. Die randseitige Profilierung 15 der zweiten Montageplatte 10.1 ist mit dem Montageplattenkorpus 13 der ersten Montageplatte 10 mittels eines Niets 90 verbunden. In gleicher Weise ist die Abkantung 11 der ersten Montageplatte 10 mit dem Montageplattenkorpus 13.1 der zweiten Montageplatte 10.1 ebenfalls mittels eines Niets 90 verbunden.

Das Profilelement 20 weist vier Seitenflächen auf, nämlich eine erste Längswand 21, eine zweite Längswand 22, die in einer Ebene senkrecht zu derjenigen der ersten Längswand 21 liegt und die mit der ersten Längswand 21 verbunden ist, d.h. in diese übergeht, ferner ein erstes rechtwinklig abgekantetes Flächenelement 23 an einem Längsschenkel der ersten Längswand 21, das der zweiten Längswand 22 gegenüberliegt, und schließlich ein zweites rechtwinklig abgekantetes Flächenelement 24 an einem Längsschenkel der zweiten Längswand 22, das der ersten Längswand 21 gegenüberliegt. Ein Längsschlitz 25 ist zwischen dem ersten Flächenelement 23 und dem zweiten Flächenelement 24 ausgebildet. Der Querschnitt dieses Profilelements ist im Wesentlichen quadratisch, wobei die Übergänge zwischen den einzelnen Seitenflächen 21, 22, 23, 24 aus technischen Gründen im Allgemeinen mehr oder minder abgerundet sind.

Der in Fig. 1a gezeigte Querschnitt durch eine Verbindung eines Profilelements 20 mit zwei Montageplatten 10, 10.1 von zwei Montagebaugruppen 1000, die in ein Integralgerüst 100 (Fig. 3a, 3b) eingebaut sind, kann beispielsweise ein Horizontalschnitt sein, sodass die Montageplatten 10, 10.1 und das Profilelement 20 senkrecht stehen. Das Profilelement 20 ist in der exemplarisch gezeigten Verbindung mit seinem Längsschlitz 25 in einer Hohlkehle 12 der einen mit einer Abkantung 11 versehenen Montageplatte 10 angeordnet. Hierzu ist das Profilelement 20 bündig in die Hohlkehle 13 dieser Montageplatte 10 eingepasst, sodass die abgekanteten Flächenelemente 23, 24 des Profilelements 20 an der Oberfläche des Montageplattenkorpus 13 einerseits und der Oberfläche der Abkantung 11 andererseits flach anliegen. Des Weiteren ist an der Außenseite der Abkantung 11 der Montageplatte 10 eine weitere Montageplatte 10.1 angesetzt, die sich in der Figur nach oben erstreckt. Die Montageplatten 10, 10.1 und das Profilelement 20 sind durch Nieten 90 miteinander verbunden.

Dieses Konstruktionsprinzip kann für den Aufbau der Montagebaugruppen 1000 eines Integralgerüstes 100 und der Verbindung der Montagebaugruppen 1000 miteinander verwendet werden, sodass ein stabiler Aufbau und eine einfache und schnelle Montage des Integralgerüstes 100 ermöglicht werden. Ein derartiges Integralgerüst 100 ist beispielhaft in Fig. 3a, 3b gezeigt. Das in Fig. 3a, 3b gezeigte Integralgerüst 100 ist ein Niederspannungsgerüst, das beispielsweise in einem Schienentriebfahrzeug installiert werden kann. Dieses Gerüst 100 ist zur Aufstellung auf dem Fahrzeugboden und zur Befestigung an den Fahrzeug-Innenwänden (nicht dargestellt) vorgesehen. Das dargestellte Niederspannungsgerüst 100 wird auf unterschiedlichen Bodenniveaus in dem Schienenfahrzeug installiert und weist daher zwei unterschiedliche Bodenniveaus aufweisende Teile 110, 120 auf: Im montierten Zustand steht der linke Teil 110 des Niederspannungsgerüstes 100 gegenüber dem rechten Teil 120 auf einem erhöhten Niveau. Das Niederspannungsgerüst 100 ist zur Aufnahme einer Mehrzahl von unterschiedlichen elektrischen Einrichtungen 300 ausgelegt.

Zur Befestigung auf Bodenelementen des Schienenfahrzeuges weist dieses Niederspannungsgerüst 100 Fußelemente 40 auf. Zur Befestigung an einer inneren Seitenwand des Schienenfahrzeugs weist das Gerüst 100 ferner rückseitige Befestigungslaschen 50 auf. Oberhalb und hinter einer oben angeordneten haubenförmigen Abdeckung 1400 sind ferner Aufhängeelemente 49 in Form von Aufhängeösen angeordnet.

Das Gerüst 100 weist an der Vorderseite 101 zwei Türelemente auf, nämlich ein erstes Türelement 1110, das links über Scharniere 60 angeschlagen ist, und ein zweites Türelement 1210, das rechts über Scharniere 60 angeschlagen ist (für das erste Türelement 1110: Fig. 4a). Die Seitenwände 1120, 1220, Rückwand 1300, Türelemente 1110, 1210 und die obere haubenförmige Abdeckung 1400 stellen erfindungsgemäß Montagebaugruppen 1000 dar, die miteinander verbunden sind. Lediglich die Türelemente 1110, 1210 sind über die Scharniere 60 mit den anderen Baugruppen 1000 verbunden, während die anderen Montagebaugruppen 1000 über Niete 90 miteinander verbunden sind. Die Montagebaugruppen 1000 sind wiederum aus Montageplatten 10, 10.x, gegebenenfalls mit randseitigen Abkantungen 11 oder Profilierungen 15, und Versteifungen in Form von langgestreckten offenen Profilelementen 20, 20.x gebildet. Dieser Aufbau weist die für den Betrieb in einem Schienenfahrzeug erforderliche Steifigkeit auf, die beispielsweise auch bei Unfällen eine negative Beschleunigung von 5 g (Erdbeschleunigung) ohne Beschädigung übersteht. Die durch die Montagebaugruppen 1000 gebildeten Wände weisen ferner Öffnungen, beispielsweise zur Belüftung oder zur Kabeldurchführung auf.

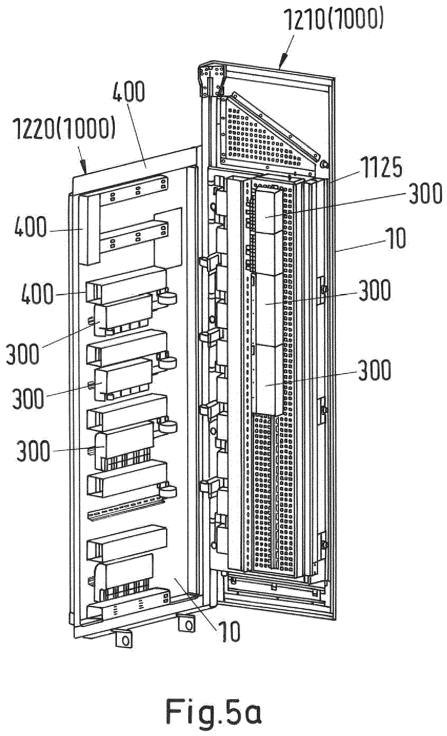

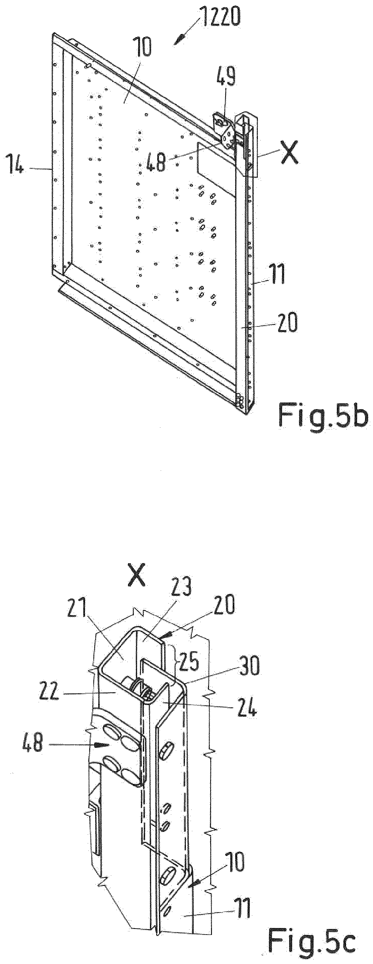

In den Fig. 4 bis 9 sind die einzelnen Montagebaugruppen 1000, die das Niederspannungsgerüst 100 bilden, im Detail dargestellt:
Die die linke Seitenwand 1120 und die rechte Seitenwand 1220 sowie die über Scharniere 60 daran angelenkten Türelemente 1110, 1210 bildenden Montagebaugruppen 1000 mit bzw. ohne Aufbauten, d.h. Kabelkanälen 400 und elektrischen Einrichtungen 300, sind in Fig. 4a, 4b, 4c, 4d und Fig. 5a, 5b, 5c dargestellt. Fig. 4a und Fig. 5a zeigen jeweils die bereits vollständig bestückten Montagebaugruppen 1000, wobei die jeweilige Seitenwand 1120 bzw. 1220 und das jeweilige Türelement 1110 bzw. 1210 aneinander angelenkt dargestellt sind. Fig. 4b und Fig. 5b zeigen jeweils die unbestückten Montageplatten 10, die mit den Profilelementen 20 versteift sind. Fig. 4c und Fig. 5c zeigen jeweils Ausschnitte aus Fig. 4b bzw. Fig. 5b.

An der linken Seitenwand 1120 sind bereits mehrere horizontal verlaufende Kabelkanäle 400 und ein vertikal verlaufender Kabelkanal 400 montiert, sodass diese sich im montierten Zustand im Niederspannungsgerüst 100 innenliegend befinden (Fig. 4a). Die linke Seitenwand 1120 bildet eine Montagebaugruppe 1000. Das daran angelenkte linke Türelement 1110 bildet ebenfalls eine Montagebaugruppe 1000, die mehrere elektrische Einrichtungen 300 im Niederspannungsgerüst 100 ebenfalls innenliegend aufweist. Die elektrischen Einrichtungen 300 des linken Türelements 1110 sind auf einer weiteren Halteplatte 1115 montiert, die ihrerseits auf der das Türelement 1110 bildenden Montageplatte 10 und beabstandet zu dieser, dem Innenraum des Niederspannungsgerüstes 100 zugewandt, befestigt ist. Dadurch wird dem Türelement 1110 eine erhöhte Steifigkeit verliehen.

Die linke Seitenwand 1120 ist durch eine Montageplatte 10 gebildet, die am vorderen Seitenrand eine Abkantung 11 zum Innenraum des Niederspannungsgerüstes 100 hin aufweist (Fig. 4b, 4c). Dort ist auch das linke Türelement 1110 angelenkt. In die Hohlkehle 12 dieser Abkantung ist ein Profilelement 20 eingepasst, dass sich dort bündig anlegt und mit der Montageplatte 10 verbunden ist. Das Profilelement 20 erstreckt sich, vom unteren Rand ausgehend, über die gesamte Höhe der Montageplatte 10 und zusätzlich über diese nach oben hinaus, um eine Verbindung mit dem benachbarten linken Türelement 1110 herstellen zu können. Das Profilelement 20 schließt bündig mit dem linken Türelement 1110 nach oben ab. Die Abkantung 11 der Montageplatte 10 der linken Seitenwand 1120 liegt an dem Profilelement 20 an der dem linken Türelement 1110 zugewandten Seite an (Fig. 4a, 4b, 4c). Das Profilelement 20 ist in Fig. 4c gut erkennbar. Es weist das in Fig. 1a, 2 dargestellte Profil auf. Der Längsschlitz 25 des Profilelements 20 ist zur Hohlkehle der Abkantung 11 der Montageplatte 10 ausgerichtet. Oberhalb des oberen Seitenrandes der linken Seitenwand 1120 wird das Profilelement 20 ferner durch ein langgestrecktes Winkelelement 30 versteift, das den Längsschlitz 25 des Profilelements 20 schließt und mit diesem verbunden ist. Hierzu ist das Winkelelement 30 an einer (23) der beiden Seitenflächen 23, 24 des Profilelements 20, die den Längsschlitz 25 bilden, von außen und an einer anderen (24) dieser beiden Seitenflächen 23, 24 von innen angesetzt. Das Profilelement 20 ist mit der Montageplatte 10 und mit dem Winkelelement 30 vernietet. Am oberen Ende des Profilelements 20 ist ein einteiliges Verbindungselement 48 angesetzt und mit dem Profilelement 20 verbunden, wobei das Verbindungselement 48 an den beiden zum Innenraum des Integralgerüstes 100 weisenden Seitenflächen 21, 22 des Profilelements 20 anliegt und mit diesen verbunden ist. Das Verbindungselement 48 mit einer Aufhängeöse 49 ist in Fig. 4d gezeigt, in der das Profilelement 20 mit dem daran befestigten Verbindungselement 48 und der daran befestigten Aufhängeöse 49 gezeigt ist und in der sich die Aufhängeöse 49 durch eine Öffnung in der sich oberhalb der linken Seitenwand angeordneten haubenförmigen Abdeckung 1400 hindurch erstreckt.

An der rechten Seitenwand 1220 sind ebenfalls mehrere horizontale Kabelkanäle 400 und ein kurzer vertikal verlaufender Kabelkanal 400 sowie mehrere elektrische Einrichtungen 300 montiert, sodass sich diese im montierten Niederspannungsgerüst 100 innenliegend befinden (Fig. 5a). Die rechte Seitenwand 1220 bildet eine Montagebaugruppe 1000. Das daran angelenkte rechte Türelement 1210 bildet ebenfalls eine Montagebaugruppe 1000, die mehrere elektrische Einrichtungen 300 im Niederspannungsgerüst 100 innenliegend aufweist. Die elektrischen Einrichtungen 300 des rechten Türelements 1210 sind auf einer weiteren Halteplatte 1125 montiert, die ihrerseits auf der das Türelement 1210 bildenden Montageplatte 10 und, dem Innenraum des Niederspannungsgerüstes 100 zugewandt, beabstandet zu dieser befestigt ist. Dadurch wird dem Türelement 1210 eine erhöhte Steifigkeit verliehen.

Auch die rechte Seitenwand 1220 ist durch eine Montageplatte 10 gebildet, wobei diese Montageplatte 10 an allen vier Rändern zum Innenraum des Niederspannungsgerüstes 100 hin profiliert ist. Am rechten Seitenrand weist diese Montageplatte 10 eine nach vorne ausgebildete Abkantung 11 auf (Fig. 5b, 5c). In die Hohlkehle dieser Abkantung 11 ist ein Profilelement 20 bündig eingepasst und mit der Montageplatte 10 verbunden. Das Profilelement 20 erstreckt sich, vom unteren Rand der Montageplatte 10 ausgehend, über deren gesamte Höhe und zusätzlich über diese nach oben hinaus, um eine Verbindung mit dem benachbarten rechten Türelement 1210 herstellen zu können. Das Profilelement 20 schließt nach oben bündig mit dem rechten Türelement 1210 ab. Die vordere Abkantung 11 der Montageplatte 10 der rechten Seitenwand 1220 liegt an der dem rechten Türelement 1210 zugewandten Seite an dem Profilelement 20 an (Fig. 5b, 5c). Das Profilelement 20 ist in Fig. 5c gut erkennbar. Es weist das in Fig. 1a, 2 dargestellte Profil auf. Der Längsschlitz 25 des Profilelements 20 ist wiederum zur Hohlkehle der Abkantung 11 ausgerichtet. Oberhalb des oberen Seitenrandes der rechten Seitenwand 1220 wird das Profilelement 20 ferner durch ein langgestrecktes Winkelelement 30 versteift, das den Längsschlitz 25 des Profilelements 20 schließt und mit diesem verbunden ist. Hierzu ist das Winkelelement 30 an einer (24) der beiden Seitenflächen 23, 24 des Profilelements 20, die den Längsschlitz 25 bilden, von außen und an einer anderen (23) der beiden Seitenflächen 23, 24 von innen angesetzt. Das Profilelement 20 ist mit der Montageplatte 10 und mit dem Winkelelement 30 verbunden. Am oberen Ende des Profilelements 20 ist ein einteiliges Verbindungselement 48 angesetzt, das an den beiden zum Innenraum des Integralgerüstes 100 weisenden Seitenflächen 21, 22 des Profilelements 20 anliegt und mit diesen verbunden ist und das an einem nach oben weisenden Flansch eine Aufhängeöse 49 trägt. Dieses Verbindungselement 48 mit der Aufhängeöse 49 entspricht dem in Fig. 4d gezeigten Verbindungselement 48.

Die die linke Seitenwand 1120 und die rechte Seitenwand 1220 bildenden Montagebaugruppen 1000 sind an der Rückseite 102 des Niederspannungsgerüstes 100 mit der die Rückwand 1300 des Gerüstes 100 bildenden Montagebaugruppe 1000 verbunden.

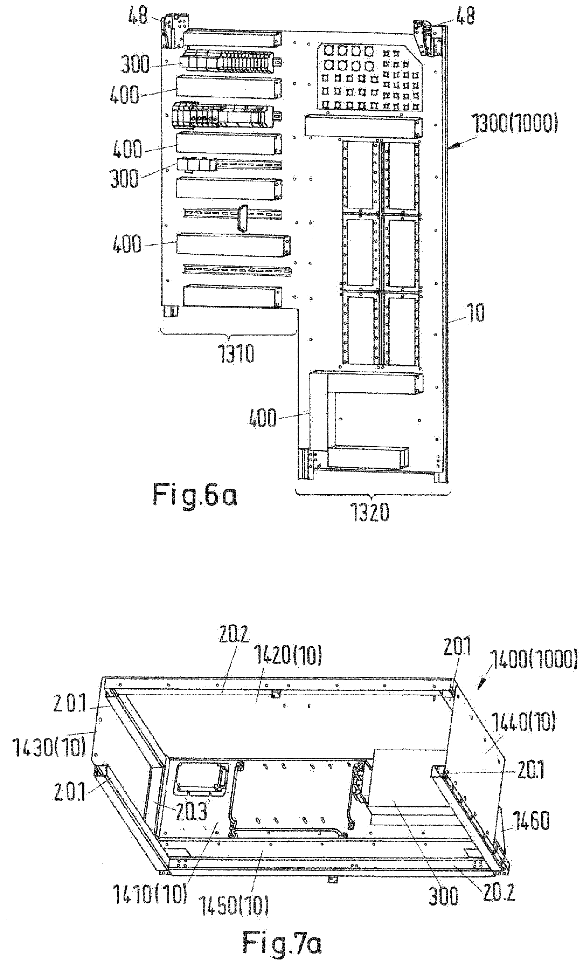

In Fig. 6a ist die Rückwand 1300 von vorne, d.h. vom Innenraum aus, gesehen dargestellt. Der linke Teil 1310 dieser Montagebaugruppe 1000 setzt bodenseitig an einem höheren Niveau an als der rechte Teil 1320, um sich an das Bodenniveau in dem Innenraum des Schienenfahrzeuges anzupassen. Die Rückwand 1300 trägt mehrere horizontal verlaufende Kabelkanäle 400 und einen vertikal verlaufenden Kabelkanal 400. Außerdem sind mehrere elektrische Einrichtungen 300 montiert.

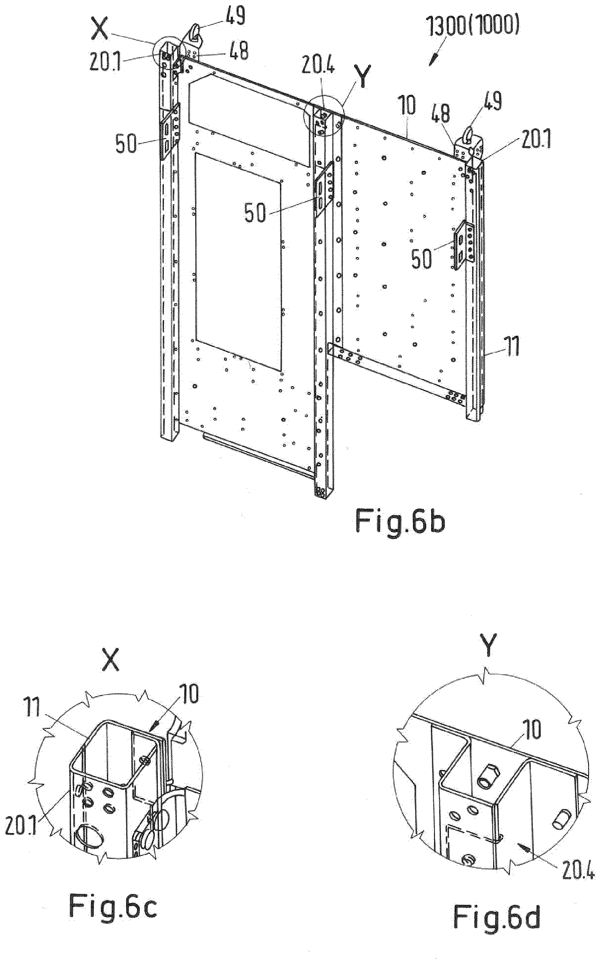

Die Rückwand 1300 ist wiederum durch eine Montageplatte 10 und mehrere Profilelemente 20.1, die mit der Montageplatte 10 verbunden sind, gebildet (Fig. 6b). Die Montageplatte 10 weist nach hinten ausgebildete Abkantungen 11 an den vertikalen Seitenrändern auf. In diese sind wiederum offene Profilelemente 20.1 eingepasst (Fig. 6c). Diese Profilelemente 20.1 erstrecken sich, ausgehend vom unteren Rand der Montageplatte 10, über deren gesamte Höhe und zusätzlich geringfügig nach oben darüber hinaus. An den Profilelementen 20.1 sind außerdem einteilige Verbindungselemente 48 befestigt, die jeweils an der Vorderseite der Montageplatte 10 anliegen und die jeweils einen nach oben weisenden Flansch aufweisen, an dem eine Aufhängeöse 49 befestigt ist. Ferner weist die Rückwand 1300 etwa mittig eine aus mehreren Profilelementen gebildete Hutschiene 20.4 auf (Fig. 6d), die ebenfalls ein langgestrecktes offenes Profilelement bildet. Die Hutschiene 20.4 verleiht der Montageplatte 10 zusätzliche Steifigkeit. Die durch Profilelemente gebildete Hutschiene 20.4 erstreckt sich exakt über die gesamte Höhe der Montageplatte 10. Im oberen Bereich dieser Montagebaugruppe 1000 sind an den Profilelementen 20.1 sowie der Hutschiene 20.4 außerdem nach hinten abstehende Befestigungslaschen 50 befestigt. Mit diesen kann das Niederspannungsgerüst 100 an einer Innenwand des Fahrzeuges befestigt werden.

Zur Verbindung der linken Seitenwand 1120 und der rechten Seitenwand 1220 mit der Rückwand 1300 überlappen die jeweiligen hinteren Ränder 14 der Montageplatten 10 der linken Seitenwand 1120 bzw. rechten Seitenwand 1220 (Fig. 4b, 5b) mit den Abkantungen 11 bzw. Profilelementen 20.1 an den äußeren vertikalen Rändern der Rückwand 1300. Die hinteren Ränder 14 der Montageplatten 10 liegen hierzu von außen an den Abkantungen 11 bzw. Profilelementen 20.1 der Rückwand 1300 an. Sie sind in dieser Position mit der Montageplatte 10 der Rückwand 1300 verbunden.

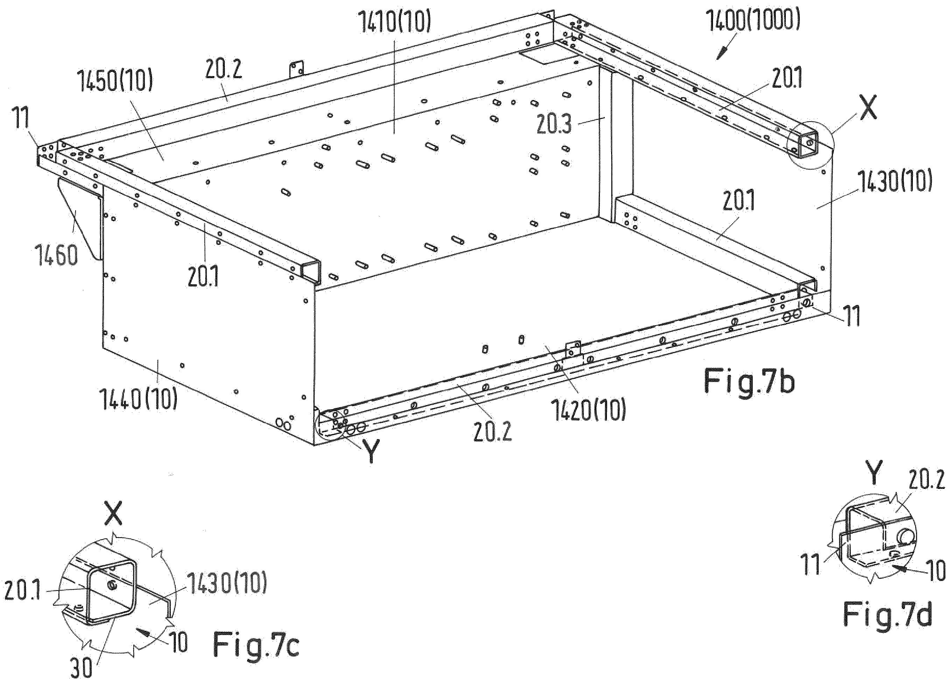

Nach oben ist das Niederspannungsgerüst 100 durch eine eine haubenartige Abdeckung 1400 bildende Montagebaugruppe 1000 abgeschlossen. Diese ist in Fig. 7a, 7b dargestellt. Fig. 7a, 7b zeigen die Abdeckung 1400 in Ansichten von vorne, wobei die Darstellung von Fig. 7b die Abdeckung 1400 in einer über Kopf gedrehten Stellung wiedergibt.

An einem hinteren Wandelement 1410 der Abdeckung 1400 sind elektrische Einrichtungen 300 montiert.

Die Abdeckung 1400 ist durch mehrere eine kastenförmige Einheit bildende Montageplatten 10 gebildet, die das hintere Wandelement 1410, ein oberes Wandelement 1420, zwei seitliche Wandelemente 1430, 1440 sowie ein unteres Wandelement 1450 ausbilden. Das untere Wandelement 1450 steht über das hintere Wandelement 1410 nach hinten vor und ist über seitliche Versteifungswinkel 1460 stabilisiert.

Acht Profilelemente 20.1, 20.2, 20.3 versteifen die Abdeckung 1400, von denen vier Profilelemente 20.1 jeweils parallel zueinander und in einer Richtung von der Vorderseite 101 des Niederspannungsgerüstes 100 zu dessen Rückseite 102 verlaufen. Von diesen vier Profilelementen 20.1 sind jeweils zwei in die Hohlkehle an den Übergängen von dem oberen Wandelement 1420 zu den jeweiligen seitlichen Wandelementen 1430, 1440 eingepasst und dort mit der entsprechenden Montageplatte 10 verbunden. Der jeweilige Längsschlitz 25 der Profilelemente 20.1 ist durch die seitlichen Wandelemente 1430, 1440 und das obere Wandelement 1420 geschlossen. Zwei weitere Profilelemente 20.1 sind an den unteren horizontal verlaufenden Rändern der seitlichen Wandelemente 1430, 1440 angeordnet und dort mit der entsprechenden Montageplatte 10 verbunden. Diese Profilelemente 20.1 sind durch zusätzliche Winkelelemente 30 geschlossen (Fig. 7c). Zwei weitere Profilelemente 20.2 verlaufen ebenfalls horizontal und erstrecken sich parallel zur Vorderseite 101 bzw. Rückseite 102 des Niederspannungsgerüstes 100. Eines dieser Profilelemente 20.2 ist am hinteren Rand des unteren Wandelements 1450 und ein weiteres am vorderen Rand des oberen Wandelements 1420 angeordnet und dort mit der entsprechenden Montageplatte 10 verbunden. In diesen Fällen ist der Längsschlitz 25 dieser Profilelemente 20.2 durch die jeweilige Abkantung 11 der Montageplatten 10 geschlossen. Zwei weitere Profilelemente 20.3 verlaufen in vertikaler Richtung und sind mit den jeweiligen seitlichen Wandelementen 1430, 1440 und dem hinteren Wandelement 1410 verbunden. Indem diese Profilelemente 20.3 in die Hohlkehlen im Übergang von dem hinteren Wandelement 1410 zu dem rechten Wandelement 1440 bzw. zu dem linken Wandelement 1430 eingepasst sind, sind sie ebenfalls geschlossen. Die Profilelemente 20.1, 20.2, 20.3 haben wiederum das in Fig. 2 gezeigte Profil (Fig. 7d). Die parallel zur Vorderseite 101 bzw. Rückseite 102 des Niederspannungsgerüstes 100 verlaufenden Profilelemente 20.2 sind ferner in Hohlkehlen des dort abgekanteten oberen Wandelements 1420 bzw. unteren Wandelements 1450 eingepasst und mit diesen Wandelementen 1420, 1450 verbunden, wobei die Abkantungen 11 der Wandelemente 1420, 1450 die jeweiligen Profilelemente 20.2 umgreift (Fig. 7b, 7c, 7d). Dagegen sind die von vorn nach hinten an den unteren Rändern der seitlichen Wandelemente 1430, 1440 verlaufenden Profilelemente 20.1 mit diesen lediglich flach verbunden, d.h. diese Wandelemente 1430, 1440 weisen in diesem Falle keine Abkantungen auf.

Die haubenförmige Abdeckung 1400 ist mit den die linke Seitenwand 1120 und die rechte Seitenwand 1220 bildenden Montagebaugruppen 1000 mittels deren aufrecht stehenden Profilelementen 20 verbunden, indem deren nach oben überstehenden Abschnitte von unten in die haubenförmige Abdeckung 1400 hineinreichen und dabei vor den unteren horizontal verlaufenden Profilelementen 20.1 der Abdeckung 1400 angeordnet sind. Diese hineinragenden Abschnitte liegen im montierten Zustand an den vorderen Flanken der seitlichen Wandelemente 1430, 1440 an und sind mit diesen verbunden.

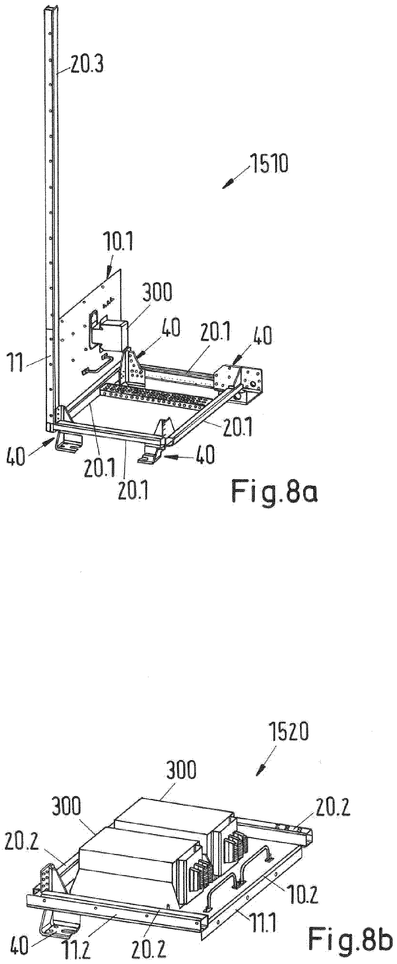

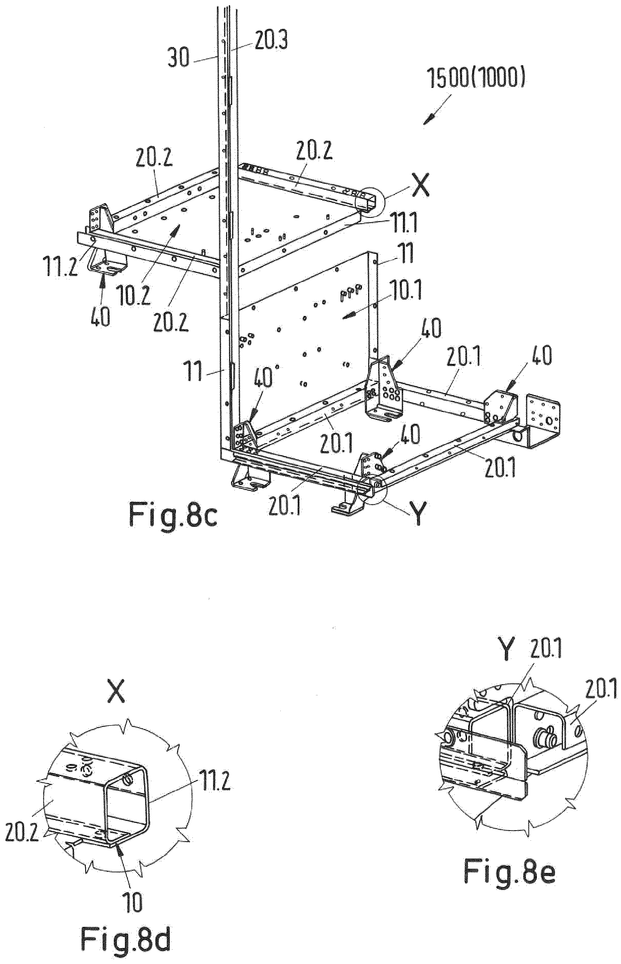

Des Weiteren weist das Niederspannungsgerüst 100 eine ein Basisgerüst 1500 bildende Montagebaugruppe 1000 auf (Fig. 8a, 8b, 8c). Diese ist zweiteilig aufgebaut, nämlich aus einer rechten Teil-Montagebaugruppe 1510 und einer linken Teil-Montagebaugruppe 1520. Die rechte Teil-Montagebaugruppe 1510 ist in Fig. 8a und die linke in Fig. 8b gezeigt. Die rechte Teil-Montagebaugruppe 1510 schließt den rechten weiter nach unten reichenden Teil 120 des Niederspannungsgerüstes 100 im unteren Bereich mit der Montageplatte 10.1 nach links ab und die linke Teil-Montagegruppe 1520 den linken, weiter oben ansetzenden Teil 110 des Niederspannungsgerüstes 100 mit der Montageplatte 10.2 nach unten.

In Fig. 8a ist die elektrische Einrichtungen 300 aufweisende rechte Teil-Montagebaugruppe 1510 und in Fig. 8b die ebenfalls elektrische Einrichtungen 300 aufweisende linke Teil-Montagebaugruppe 1520 dargestellt.

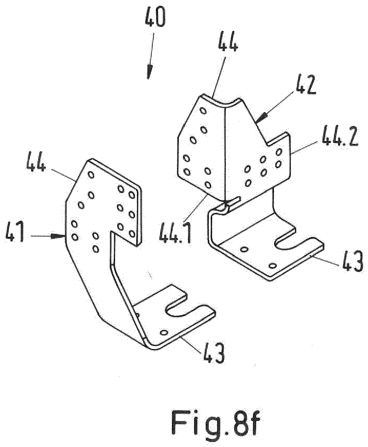

Beide Teil-Montagebaugruppen 1510, 1520 weisen jeweils einen horizontalen Rahmen aus Profilelementen 20.1, 20.2 auf, wobei die Profilelemente 20.1, 20.2 wiederum das in Fig. 2 gezeigte Profil aufweisen (Fig. 8d, 8e). Die horizontalen Profilelemente 20.1 der rechten Teil-Montagebaugruppe 1510 sind durch zweiteilige Fußelemente 40 miteinander verbunden, die zusätzlich eine Funktion als Verbindung aufweisen. Diese Fußelemente 40 sind aus einem ersten Fußelementteil 41 und einem zweiten Fußelementteil 42 gebildet (Fig. 8f). Beide Fußelementteile 41, 42 weisen Fußteile mit jeweils einer bodenseitigen horizontalen Fußplatte 43 auf. Die beiden Fußelementteile 41, 42 weisen ferner senkrechte Verbindungsplatten 44 auf. Die Verbindungsplatte 44 des ersten Fußelementteils 41 verläuft ausschließlich in einer Ebene, während die Verbindungsplatte 44 des zweiten Fußelementteils 42 durch zwei rechtwinklig zueinander verlaufende und miteinander verbundene Verbindungsplattenteile, nämlich ein erstes Verbindungsplattenteil 44.1 und ein zweites Verbindungsplattenteil 44.2, gebildet sind. Die Verbindungsplatte 44 des ersten Fußelementteils 41 und der erste Verbindungsplattenteil 44.1 des zweiten Fußelementteils 42 einerseits und die Fußplatten 43 beider Fußelementteile 41, 42 andererseits sind derart zueinander angeordnet, dass die Fußplatten 43 aneinander anliegen, wenn die parallel zueinander verlaufenden Bereiche der Verbindungsplatten 44 beider Fußelementteile 41, 42 ebenfalls aneinander anliegen. Dadurch können die beiden Fußelementteile 41, 42 gemeinsam mit einer senkrechten Fläche eines Profilelements 20 verbunden werden, während deren Fußplatten 43 aneinander anliegend fest auf einer Bodenfläche befestigt werden können. Der zweite Verbindungsplattenteil 44.2 kann an einem zweiten horizontalen Profilelement 20.1 befestigt werden, das rechtwinklig zu einem ersten horizontalen Profilelement 20.1 angeordnet ist, an dem deren erster Teil 44.1 befestigt ist. Die Fußelementteile 41, 42 liegen an den Profilelementen 20.1 von innen an. Über die Fußplatten 43 und die Verbindungsplattenteile 44.1, 44.2 sind die beiden Fußelementteile 41, 42 miteinander verbindbar. Ferner kann auch die über das erste Verbindungsplattenteil 44.1 überstehende Lasche des ersten Fußelementteils 41 mit einem senkrecht stehenden dritten Profilelement 20.3 verbunden sein, um dieses mit den anderen Profilelementen 20.1 zu verbinden. Somit werden die Fußelemente 40 an der Innenseite des durch die horizontalen Profilelemente 20.1 gebildeten Rahmens befestigt.

Die rechte Teil-Montagebaugruppe 1510 weist ferner das vertikale Profilelement 20.3 auf, das mit einem der Fußelemente 40 mit dem horizontalen Profilelement-Rahmen verbunden ist. Dieses Profilelement 20.3 erstreckt sich weit nach oben. Es ist im montierten Niederspannungsgerüst 100 im Bereich zwischen dem linken Teil 110 und dem rechten Teil 120 des Niederspannungsgerüstes 100 und zwar vorne hinter den beiden Türelementen 1110, 1210 und in dem Bereich, in dem diese aneinanderstoßen, angeordnet. Im unteren Bereich ist dieses Profilelement 20.3 in eine Abkantung 11 einer senkrecht stehenden Montageplatte 10.1 der rechten Teil-Montagebaugruppe 1510 eingepasst und mit dieser verbunden (Fig. 8a, 8c). Oberhalb dieser Montageplatte 10.1 ist das Profilelement 20.3 wiederum durch ein Winkelelement 30, das den Längsschlitz des Profilelements 20.3 schließt, versteift. Die senkrecht stehende Montageplatte 10.1 der rechten Teil-Montagebaugruppe 1510 weist an der dem Profilelement 20.3 gegenüberliegenden Seite ebenfalls eine Abkantung 11 auf. Diese ist mit den die Hutschiene 20.4 bildenden Profilelementen der Rückwand 1300 verbunden.

Die linke Teil-Montagebaugruppe 1520 ist durch eine horizontal angeordnete Montageplatte 10.2 sowie drei Profilelemente 20.2, die einen dreiseitigen Rahmen für diese Montageplatte 10.2 bilden, gebildet. Diese Montageplatte 10.2 ist an einer der rechten Teil-Montagebaugruppe 1510 zugewandten Seite nach unten abgekantet und bildet dort eine erste Abkantung 11.1. Außerdem ist sie an allen übrigen drei Rändern nach oben abgekantet und bildet dort jeweils eine zweite Abkantung 11.2. An diesen drei nach oben weisenden Abkantungen 11.2 befinden sich die Profilelemente 20.2, die in die jeweiligen Hohlkehlen der Abkantungen 11.2 eingepasst und dort mit der Montageplatte 10.2 verbunden sind, sodass sie von dieser geschlossen sind. Sowohl die Rückwand 1300 als auch die linke Seitenwand 1120 liegen an jeweils einem dieser zwei Profilelemente 20.2 bzw. den Abkantungen 11.2 an und sind mit diesen verbunden. An der vorderen linken Ecke der linken Teil-Montagebaugruppe 1520 ist ferner ein weiteres zweiteiligen Fußelement 40 befestigt, das ebenfalls ein Fußteil aufweist, mit dem das Niederspannungsgerüst 100 auf einer höher gelegenen Bodenfläche im Schienenfahrzeug-Innenraum befestigt werden kann.

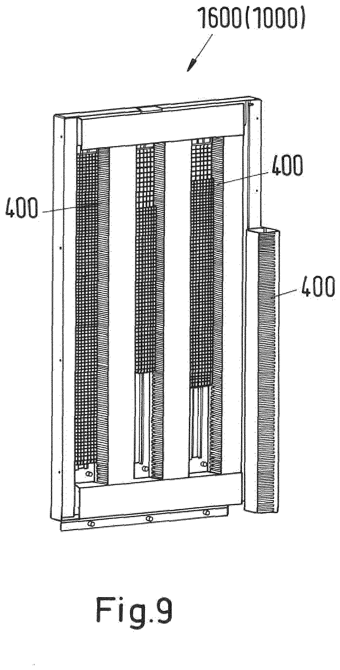

Schließlich enthält das Niederspannungsgerüst 100 eine eine Zwischenwand 1600 bildende Montagebaugruppe 1000, die in dem Bereich, in dem die beiden Türelemente 1110, 1120 aneinanderstoßen, den Innenraum in dem Niederspannungsgerüst 100 von vorn nach hinten verlaufend in einen linken und einen rechten Raumteil unterteilt. Diese Montagebaugruppe 1000 ist in Fig. 9 dargestellt. Sie weist mehrere vertikal verlaufende Kabelkanäle 400 auf.

Im rückwärtigen Teil ist die Zwischenwand 1600 im Bereich der Hutschiene 20.4 mit der Rückwand 1300 verbunden. Der vordere Vertikalrand der Zwischenwand 1600 ist mit dem vertikal stehenden Profilelement 20.3 der rechten Teil-Bodenmontagebaugruppe 1510 verbunden.

Soweit vorstehend jeweils Verbindungen der Bauelemente untereinander angegeben sind, können diese grundsätzlich unlösbar oder lösbar ausgeführt sein. Es ist bevorzugt, dass die Verbindungen unlösbar sind. Ganz besonders bevorzugt ist es, wenn die Verbindungen durch Niete 90 hergestellt werden. Es können natürlich auch unterschiedliche Verbindungstechniken eingesetzt werden. Die einzelnen Bauelemente, Montageplatten 10, 10.x, Profilelemente 20, 20.x, Fußelemente 40, Verbindungselemente 48 und dergleichen sind vorzugsweise aus verzinktem Stahl oder Aluminium hergestellt.

Durch die jeweilige Konstruktion der einzelnen Montagebaugruppen 1000 sind diese auch dann selbsttragend, wenn schwere elektrische Einrichtungen 300 auf diesen montiert sind. Daher können diese Baugruppen 1000 für den Ausbau des Niederspannungsgerüstes 100 zunächst mit den elektrischen Einrichtungen 300 ausgerüstet und zumindest teilverkabelt und dann zusammengebaut werden.

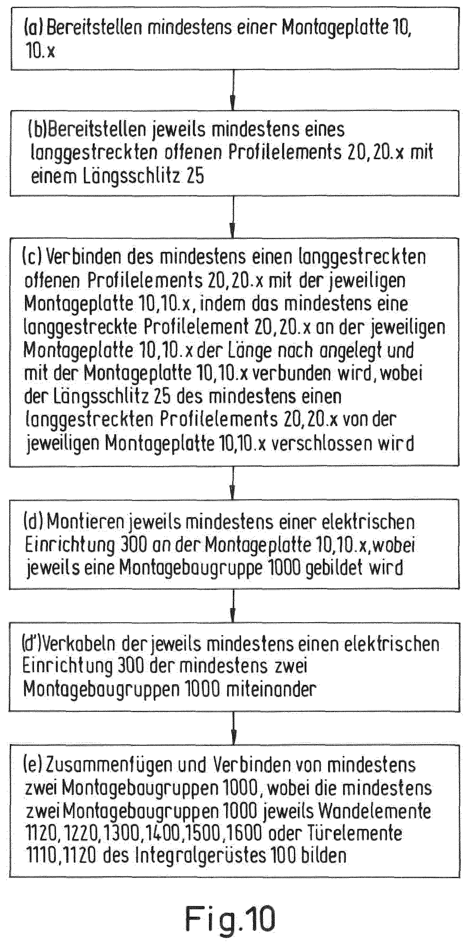

Unter Bezugnahme auf Fig. 10 wird das Montageverfahren erläutert:
Hierzu werden zunächst die Montageplatten 10, 10.x und die langgestreckten offenen Profilelemente 20, 20.x, die einen Längsschlitz 25 aufweisen, bereitgestellt (Verfahrensschritte (a), (b)). Anschließend werden die Profilelemente 20, 20.x mit der jeweiligen Montageplatte 10, 10.x verbunden, indem das mindestens eine langgestreckte Profilelement 20, 20.x der Länge nach an der Montageplatte 10, 10.x angelegt und mit der Montageplatte 10, 10.x verbunden wird. Dabei wird der Längsschlitz 25 des Profilelements 20, 20.x von der jeweiligen Montageplatte 10, 10.x geschlossen (Verfahrensschritt (c)). Vorzugsweise weist die Montageplatte 10, 10.x hierzu eine randseitige Abkantung 11, 11.x auf, in deren Hohlkehle 12 das Profilelement 20, 20.x eingepasst wird, sodass es anliegt und dessen Längsschlitz 25 geschlossen wird. Auf diese Art und Weise können mehrere Profilelemente 20, 20.x an einer Montageplatte 10, 10.x montiert werden.

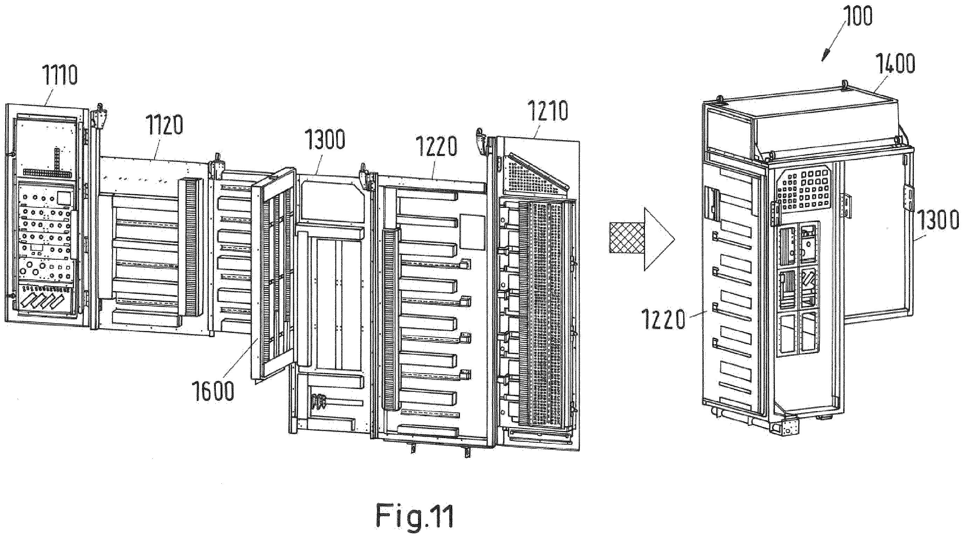

Die derart vorbereiteten versteiften Montageplatten 10, 10.x können dann auf einer Arbeitsfläche horizontal abgelegt werden, damit der Zugang zur anschließenden Montage der elektrischen Einrichtungen 300 und Kabelkanäle 400 leicht ist und unter ergonomisch günstigen Bedingungen durchgeführt werden. Die Montageplatten 10, 10.x können zu diesem Zeitpunkt bereits in einer Anordnung nebeneinander platziert werden, in der sie in dem montierten Niederspannungsgerüst 100 angeordnet sind. Hierzu wird beispielhaft für die vorstehend beschriebenen Montagebaugruppen 1000 eines Niederspannungsgerüstes 100 auf Fig. 11 verwiesen. Dort sind die vorstehend beschriebenen Montagebaugruppen 1000, nämlich (von links) das erste (linke) Türelement 1110, die linke Seitenwand 1120, die Rückwand 1300, mit der daran bereits befestigten Zwischenwand 1600, die rechte Seitenwand 1220 und das zweite (rechte) Türelement 1210, in einer Anordnung nebeneinander abgelegt, in der sie zum Zusammenbau des Niederspannungsgerüstes 100 platziert sind. Es ist aber auch möglich, die Platzierung der Montagebaugruppen 1000 für den Zusammenbau erst nach der Montage der elektrischen Einrichtungen 300 und Kabelkanäle 400 und gegebenenfalls nach deren Verkabelung vorzunehmen.

Anschließend werden die elektrischen Einrichtungen 300 und Kabelkanäle 400 auf den Montageplatten 10, 10.x montiert, sodass jeweils eine Montagebaugruppe 1000 gebildet wird (Verfahrensschritt (d)). Dabei kann auch bereits die zwischen den auf einer Montageplatte 10, 10.x zu montierenden bzw. bereits montierten elektrischen Einrichtungen 300 und Kabelkanälen 400 vorgesehenen Verkabelungen realisiert werden (Verfahrensschritt (d')). Da die Montageplatten 10, 10.x für diese Arbeitsschritte auf der horizontalen Arbeitsfläche liegen, können Personen die für den elektrischen Ausbau erforderlichen Arbeiten in ergonomisch günstiger Umgebung ausführen, wobei es wegen der leichten Zugänglichkeit möglich ist, dass mehrere Personen gleichzeitig diese Arbeiten ausführen.

Falls die Montageplatten 10, 10.x bereits in der für den Zusammenbau des Niederspannungsgerüstes 100 vorgesehenen Anordnung platziert sind (Fig. 11), kann die Verkabelung auch zwischen den verschiedenen Montageplatten 10, 10.x hergestellt werden (Verfahrensschritt (d')). Damit diese mehrere Montagebaugruppen 1000 übergreifende Verkabelung beim späteren Zusammenbau des Niederspannungsgerüstes 100 oder auch vorher bei einer eventuellen Manipulation der Montagebaugruppen 1000 nicht beschädigt wird, können die Montagebaugruppen 1000 mittels Hilfseinrichtungen miteinander verbunden werden, die den späteren Zusammenbau unterstützen. Hierzu können die Montagebaugruppen 1000 beispielsweise mit Gelenkeinrichtungen miteinander verbunden werden, die den Zusammenbau des Niederspannungsgerüstes 100 unterstützen und die nach dem Verbinden der Montagebaugruppen 1000 wieder abgebaut werden.

Nach der vollständigen Ausrüstung der Montageplatten 10, 10.x mit den elektrischen Einrichtung 300 und Kabelkanälen 400 und Herstellung zumindest einer Teilverkabelung werden die Montagebaugruppen 1000 zusammengefügt und miteinander verbunden, sodass sie Wandelemente 1120, 1220, 1300, 1400, 1500, 1600 oder Türelemente 1110, 1210 des Niederspannungsgerüstes 100 bilden (Verfahrensschritt (e)). Hierzu wird auf Fig. 11 hingewiesen. Nicht dargestellt ist hier der zusätzliche Einbau des Basisgerüstes 1500 und der haubenförmigen Abdeckung 1400. Diese können ebenfalls zusammen mit den weiteren Montagebaugruppen 1000 zum Niederspannungsgerüst 100 montiert werden.

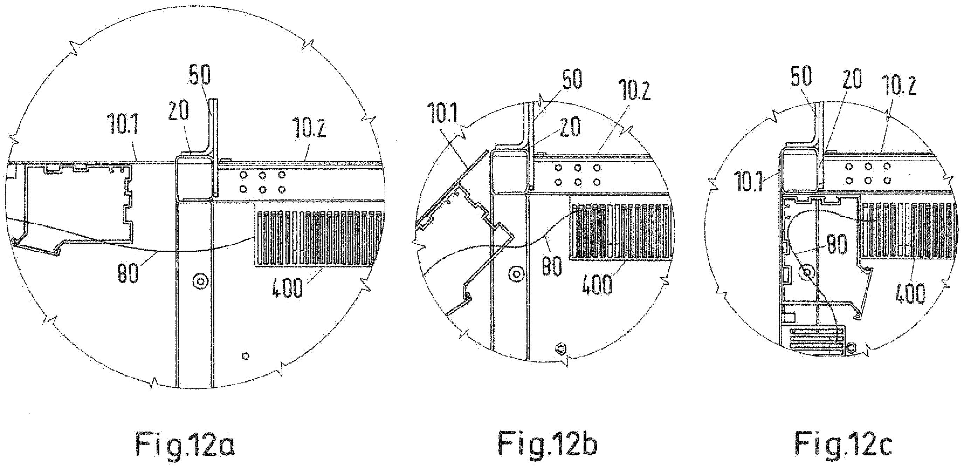

Während des Zusammenbaus der Montagebaugruppen 1000 zum Niederspannungsgerüst 100 werden die bereits (vorzugsweise in Kabelkanälen 400 untergebrachten) Kabel 80 in die endgültige Lage gebracht. In Fig. 12a, 12b, 12c ist ein entsprechender Ablauf des Zusammenbaus gezeigt. Fig. 12a zeigt die Situation, in der zwei für den Ausbau mit elektrischen Einrichtungen 300 nebeneinander angeordnete Montagebaugruppen 1000 mit Montageplatten 10.1, 10.2 angeordnet sind und exemplarisch der Verlauf eines beide Baugruppen 1000 verbindenden Kabels 80 in dieser Anordnung, das auf den Montagebaugruppen 1000 innerhalb von Kabelkanälen 400 verläuft, gezeigt ist. Fig. 12c zeigt den montierten Zustand, in dem die beiden Montagebaugruppen 1000 in der Lage miteinander verbunden sind, die sie im montierten Niederspannungsgerüst 100 einnehmen, wobei der Verlauf des Kabels 80 sich den veränderten Baugruppen-Positionen angepasst hat. Fig. 12b zeigt einen Zwischenzustand während der Bewegung der beiden Montagebaugruppen 1000 gegeneinander zum Zwecke des Zusammenbaus.

### Bezugszeichenliste:

- 10, 10.1, 10.2: Montageplatte
- 11, 11.1, 11.2: Abkantung
- 12: Hohlkehle
- 13, 13.1: Montageplattenkorpus
- 14: hinterer Rand der Montageplatte
- 15: randseitige Profilierung
- 20, 20.1, 20.2, 20.3: Profilelement
- 20.4: durch Profilelemente gebildete Hutschiene
- 21: erste Längswand
- 22: zweite Längswand
- 23: erstes abgekantetes Flächenelement
- 24: zweites abgekantetes Flächenelement
- 25: Längsschlitz
- 30: Winkelelement
- 40: Fußelement
- 41: erstes Fußelementteil
- 42: zweites Fußelementteil
- 43: Fußplatte
- 44: Verbindungsplatte des Fußelements
- 44.1: erster Teil der Verbindungsplatte
- 44.2: zweiter Teil der Verbindungsplatte
- 48: Verbindungselement
- 49: Aufhängeelemente, Aufhängeösen
- 60: Scharnierelement
- 50: Befestigungslaschen
- 80: Kabel
- 90: Niet
- 100: Integralgerüst, Niederspannungsgerüst
- 101: Vorderseite des Gerüstes
- 102: Rückseite des Gerüstes
- 110: linker Teil des Niederspannungsgerüstes
- 120: rechter Teil des Niederspannungsgerüstes
- 300: elektrische Einrichtungen
- 400: Kabelkanal
- 1000: Montagebaugruppe
- 1110: erstes (linkes) Türelement
- 1115: Halteplatte
- 1120: linke Seitenwand
- 1125: Halteplatte
- 1210: zweites (rechtes) Türelement
- 1220: rechte Seitenwand
- 1300: Rückwand
- 1310: linker Teil der Rückwand
- 1320: rechter Teil der Rückwand
- 1400: obere haubenförmige Abdeckung
- 1410: hintere Wand der Abdeckung
- 1420: oberes Wandelement der Abdeckung
- 1430: seitliches Wandelement der Abdeckung
- 1440: seitliches Wandelement der Abdeckung
- 1450: unteres Wandelement der Abdeckung
- 1460: seitliche Versteifungswinkel
- 1500: Basisgerüst
- 1510: rechte Teil-Montagebaugruppe des Bodenrahmens
- 1520: linke Teil-Montagebaugruppe des Bodenrahmens
- 1600: Zwischenwand

## Patentansprüche

1. Montagebaugruppe (1000) für ein Integralgerüst (100), für elektrische Einrichtungen in einem Schienenfahrzeug, aufweisend eine Montageplatte (10, 10.x) für mindestens eine darauf zu montierende elektrische Einrichtung (300) und mindestens ein langgestrecktes offenes Profilelement (20, 20.x) mit einem Längsschlitz (25), wobei das mindestens eine langgestreckte offene Profilelement (20, 20.x) der Länge nach an der Montageplatte (10, 10.x) anliegt und mit dieser verbunden ist und wobei der Längsschlitz (25) von der Montageplatte (10, 10.x) geschlossen ist,
wobei die Montageplatte (10, 10.x) randseitig eine Abkantung (11, 11.x) aufweist, **dadurch gekennzeichnet, dass** das langgestreckte offene Profilelement (20, 20.x) in einer Hohlkehle (12) der Montageplatte (10, 10.x) an deren randseitiger Abkantung (11, 11.x) angeordnet ist, sodass das Profilelement (20, 20.x) parallel zu der Abkantung (11, 11.x) an der Montageplatte (10, 10.x) anliegt.

2. Montagebaugruppe (1000) nach Anspruch 1, **dadurch gekennzeichnet, dass** das langgestreckte offene Profilelement (20, 20.x) durch eine erste Längswand (21), eine zweite Längswand (22), die in einer Ebene senkrecht zu derjenigen der ersten Längswand (21) liegt und die mit der ersten Längswand (21) verbunden ist, durch ein erstes rechtwinklig abgekantetes Flächenelement (23) an einem Längsschenkel der ersten Längswand (21), das der zweiten Längswand (22) gegenüberliegt, und durch ein zweites rechtwinklig abgekantetes Flächenelement (24) an einem Längsschenkel der zweiten Längswand (22), das der ersten Längswand (21) gegenüberliegt, gebildet ist, wobei der Längsschlitz (25) zwischen dem ersten Flächenelement (23) und dem zweiten Flächenelement (24) ausgebildet ist.

3. Montagebaugruppe (1000) nach Anspruch 1 oder 2, **dadurch gekennzeichnet, dass** die Montageplatte (10, 10.x) mit mindestens einem Profilelement (20, 20.x) durch Niete (90) verbunden ist.

4. Montagebaugruppe (1000) nach einem der vorstehenden Ansprüche, **dadurch gekennzeichnet, dass** die Montagebaugruppe (1000) ferner mindestens ein Scharnierelement (60) zur Anlenkung an eine weitere Montagebaugruppe (1000) aufweist.

5. Integralgerüst (100), insbesondere zur Aufnahme von elektrischen Einrichtungen (300) in einem Schienenfahrzeug, gebildet durch mindestens zwei Montagebaugruppen (1000) nach einem der Ansprüche 1 bis 6, wobei die Montagebaugruppen (1000) miteinander verbunden sind und Wandelemente (1120, 1220, 1300, 1400, 1500, 1600) oder Türelemente (1110, 1210) des Integralgerüstes (100) bilden und wobei die mindestens zwei Montagebaugruppen (1000) jeweils mindestens eine elektrische Einrichtung (300) halten.

6. Integralgerüst (100) nach Anspruch 5, **dadurch gekennzeichnet, dass** die Montagebaugruppen (1000) randseitig miteinander verbunden sind.

7. Integralgerüst (100) nach einem der Ansprüche 5 und 6, **dadurch gekennzeichnet, dass** das Integralgerüst (100) zusätzlich ein Basisgerüst 1500 zur Aufstellung des Integralgerüstes (100) auf einer Bodenfläche aufweist.

8. Verfahren zum Zusammenbauen eines Integralgerüstes (100), insbesondere für elektrische Einrichtungen (300) in einem Schienenfahrzeug, umfassend die folgenden Verfahrensschritte:
(a) Bereitstellen mindestens einer Montageplatte (10, 10.x);
(b) Bereitstellen jeweils mindestens eines langgestreckten offenen Profilelements (20, 20.x) mit einem Längsschlitz (25);
(c) Befestigen des mindestens einen langgestreckten offenen Profilelements (20, 20.x) an der jeweiligen Montageplatte (10, 10.x), indem das mindestens eine langgestreckte Profilelement (20, 20.x) an der jeweiligen Montageplatte (10, 10.x) der Länge nach angelegt und mit der Montageplatte (10, 10.x) verbunden wird, wobei der Längsschlitz (25) des mindestens einen langgestreckten offenen Profilelements (20, 20.x) von der jeweiligen Montageplatte (10, 10.x) geschlossen wird;
(d) Montieren jeweils mindestens einer elektrischen Einrichtung (300) an der Montageplatte (10, 10.x), wobei jeweils eine Montagebaugruppe (1000) gebildet wird; und
(e) Zusammenfügen und Verbinden von mindestens zwei Montagebaugruppen (1000) unter Ausbildung des Integralgerüstes (100), wobei die mindestens zwei Montagebaugruppen (1000) jeweils Wandelemente (1120, 1220, 1300, 1600) oder Türelemente (1110, 1210) des Integralgerüstes (100) bilden.
wobei die Montageplatte (10) oder eine der Montageplatten (10.x) randseitig eine Abkantung (11, 11.x) aufweist,
**dadurch gekennzeichnet,**
**dass** ein langgestrecktes offenes Profilelement (20, 20.x) in einer Hohlkehle (12) der Montageplatte (10) oder der einen der Montageplatten (10.x) an deren randseitiger Abkantung (11, 11.x) angeordnet wird, sodass das Profilelement (20, 20.x) parallel zu der Abkantung (11, 11.x) an der Montageplatte (10, 10.x) anliegt.

9. Verfahren zum Zusammenbauen eines Integralgerüstes (100) nach Anspruch 8, **dadurch gekennzeichnet, dass** es den folgenden zusätzlichen Verfahrensschritt umfasst:
(d') Verkabeln der jeweils mindestens einen elektrischen Einrichtung (300) der mindestens zwei Montagebaugruppen (1000) miteinander.

## Claims

1. Mounting assembly (1000) for an integral framework (100), for electrical devices in a rail vehicle, comprising a mounting plate (10, 10.x) for at least one electrical device (300) to be mounted thereon and at least one elongate open profile element (20, 20.x) including a longitudinal slot (25), the at least one elongate open profile element (20, 20.x) resting lengthwise against the mounting plate (10, 10.x) and being connected thereto, and the longitudinal slot (25) being closed by the mounting plate (10, 10.x),
the mounting plate (10, 10.x) including a bend (11, 11.x) at the edge, **characterized in that**
the elongate open profile element (20, 20.x) is arranged in a flute (12) of the mounting plate (10, 10.x) on the edge-side bend (11, 11.x) thereof, so that the profile element (20, 20.x) rests against the mounting plate (10, 10.x) parallel to the bend (11, 11.x).

2. The mounting assembly (1000) according to claim 1, **characterized in that** the elongate open profile element (20, 20.x) is formed by a first longitudinal wall (21), a second longitudinal wall (22), which is located in a plane perpendicular to that of the first longitudinal wall (21) and which is connected to the first longitudinal wall (21), by a first flat element (23) which is bent at a right angle, on a longitudinal leg of the first longitudinal wall (21), and located opposite the second longitudinal wall (22), and by a second flat element (24) which is bent at a right angle, on a longitudinal leg of the second longitudinal wall (22), and located opposite the first longitudinal wall (21), the longitudinal slot (25) being formed between the first flat element (23) and the second flat element (24).

3. The mounting assembly (1000) according to claim 1 or 2, **characterized in that** the mounting plate (10, 10.x) is connected to at least one profile element (20, 20.x) by a rivet (90).

4. The mounting assembly (1000) according to any one of the preceding claims, **characterized in that** the mounting assembly (1000) further comprises at least one hinge element (60) for the articulated connection to a further mounting assembly (1000).

5. An integral framework (100), in particular for accommodating electrical devices (300) in a rail vehicle, formed by at least two mounting assemblies (1000) according to any one of claims 1 to 6, wherein the mounting assemblies (1000) are connected to one another and form wall elements (1120, 1220, 1300, 1400, 1500, 1600) or door elements (1110, 1210) of the integral framework (100), and wherein the at least two mounting assemblies (100) each hold at least one electrical device (300).

6. The integral framework (100) according to claim 5, **characterized in that** the mounting assemblies (1000) are connected to one another at the edges.

7. The integral framework (100) according to any one of claims 5 and 6, **characterized in that** the integral framework (100) additionally comprises a base framework (1500) for setting up the integral framework (100) on a floor surface.

8. A method for assembling an integral framework (100), in particular for electrical devices (300) in a rail vehicle, comprising the following method steps:
(a) providing at least one mounting plate (10, 10.x);
(b) providing in each case at least one elongate open profile element (20, 20.x) including a longitudinal slot (25);
(c) attaching the at least one elongate open profile element (20, 20.x) to the respective mounting plate (10, 10.x) by applying the at least one elongate profile element (20, 20.x) lengthwise against the respective mounting plate (10, 10.x) and connecting it to the mounting plate (10, 10.x), wherein the longitudinal slot (25) of the at least one elongate open profile element (20, 20.x) is closed by the respective mounting plate (10, 10.x);
(d) mounting in each case at least one electrical device (300) on the mounting plate (10, 10.x), wherein a respective mounting assembly (1000) is formed; and
(e) joining and connecting at least two mounting assemblies (1000), forming the integral framework (100), wherein the at least two mounting assemblies (1000) each form wall elements (1120, 1220, 1300, 1600) or door elements (1110, 1210) of the integral framework (100),
the mounting plate (10, 10.x) or one of the mounting plates (10.x) including a bend (11, 11.x) at the edge,
**characterized in that**
an elongate open profile element (20, 20.x) is arranged in a flute (12) of the mounting plate (10, 10.x), or of one of the mounting plates (10.x), at the edge-side bend (11, 11.x) thereof, so that the profile element (20, 20.x) rests against the mounting plate (10, 10.x) parallel to the bend (11, 11.x).

9. A method for assembling an integral framework (100) according to claim 8, **characterized by** comprising the following additional method step:
(d') connecting the at least one electrical device (300) of the at least two mounting assemblies (1000) in each case by wires.

## Revendications

1. Module de montage (1000) pour une ossature intégrée (100), pour des dispositifs électriques dans un véhicule ferroviaire, présentant une plaque de montage (10, 10.x) pour au moins un dispositif électrique (300) à monter sur celle-ci et au moins un élément profilé (20, 20.x) ouvert allongé avec une fente longitudinale (25), dans lequel l'au moins un élément profilé (20, 20.x) ouvert allongé s'applique longitudinalement contre la plaque de montage (10, 10.x) et est relié à celle-ci et dans lequel la fente longitudinale (25) est fermée par la plaque de montage (10, 10.x),
dans lequel la plaque de montage (10, 10.x) présente côté bord un repli (11, 11.x),
**caractérisé en ce**
**que** l'élément profilé (20, 20.x) ouvert allongé est disposé dans une gorge (12) de la plaque de montage (10, 10.x) au niveau du repli (11, 11.x) côté bord de celle-ci, de sorte que l'élément profilé (20, 20.x) s'applique contre la plaque de montage (10, 10.x) parallèlement au repli (11, 11.x).

2. Module de montage (1000) selon la revendication 1, **caractérisé en ce que** l'élément profilé (20, 20.x) ouvert allongé est formé par une première paroi longitudinale (21), une deuxième paroi longitudinale (22), qui se situe dans un plan perpendiculaire à celui de la première paroi longitudinale (21) et qui est reliée à la première paroi longitudinale (21), par un premier élément plan (23) replié à angle droit au niveau d'une branche longitudinale de la première paroi longitudinale (21), laquelle est opposée à la deuxième paroi longitudinale (22), et par un deuxième élément plan (24) replié à angle droit au niveau d'une branche longitudinale de la deuxième paroi longitudinale (22), qui est opposée à la première paroi longitudinale (21), dans lequel la fente longitudinale (25) est formée entre le premier élément plan (23) et le deuxième élément plan (24).

3. Module de montage (1000) selon la revendication 1 ou 2, **caractérisé en ce que** la plaque de montage (10, 10.x) est reliée à au moins un élément profilé (20, 20.x) par des rivets (90).

4. Module de montage (1000) selon l'une quelconque des revendications précédentes, **caractérisé en ce que** le module de montage (1000) présente en outre au moins un élément charnière (60) pour l'articulation sur un autre module de montage (1000).

5. Ossature intégrée (100), destinée en particulier à loger des dispositifs électriques (300) dans un véhicule ferroviaire, formée par au moins deux modules de montage (1000) selon l'une quelconque des revendications 1 à 6, dans laquelle les modules de montage (1000) sont reliés l'un à l'autre et forment des éléments paroi (1120, 1220, 1300, 1400, 1500, 1600) ou des éléments porte (1110, 1210) de l'ossature intégrée (100) et dans laquelle les au moins deux modules de montage (1000) maintiennent respectivement au moins un dispositif électrique (300).

6. Ossature intégrée (100) selon la revendication 5, **caractérisée en ce que** les modules de montage (1000) sont reliés l'un à l'autre côté bord.

7. Ossature intégrée (100) selon l'une quelconque des revendications 5 et 6, **caractérisée en ce que** l'ossature intégrée (100) présente en plus une ossature de base 1500 pour l'installation de l'ossature intégrée (100) sur une surface de fond.

8. Procédé d'assemblage d'une ossature intégrée (100), en particulier pour des dispositifs électriques (300) dans un véhicule ferroviaire, comprenant les étapes de procédé suivantes :
(a) la fourniture d'au moins une plaque de montage (10, 10.x) ;
(b) la fourniture de respectivement au moins un élément profilé (20, 20.x) ouvert allongé avec une fente longitudinale (25) ;
(c) la fixation de l'au moins un élément profilé (20, 20.x) ouvert allongé à la plaque de montage (10, 10.x) respective, en ce que l'au moins un élément profilé (20, 20.x) allongé est appliqué longitudinalement contre la plaque de montage (10, 10.x) respective et est relié à la plaque de montage (10, 10.x), dans lequel la fente longitudinale (25) de l'au moins un élément profilé (20, 20.x) ouvert allongé est fermée par la plaque de montage (10, 10.x) respective ;
(d) le montage de respectivement au moins un dispositif électrique (300) sur la plaque de montage (10, 10.x), dans lequel respectivement un module de montage (1000) est formé ; et
(e) l'assemblage et la liaison d'au moins deux modules de montage (1000) avec formation de l'ossature intégrée (100), dans lequel les au moins deux modules de montage (1000) forment respectivement des éléments paroi (1120, 1220, 1300, 1600) ou des éléments porte (1110, 1210) de l'ossature intégrée (100),
dans lequel la plaque de montage (10) ou une des plaques de montage (10.x) présente côté bord un repli (11, 11.x), **caractérisé en ce**
**qu'**un élément profilé (20, 20.x) ouvert allongé est disposé dans une gorge (12) de la plaque de montage (10) ou de l'une des plaques de montage (10.x) au niveau du repli (11, 11.x) côté bord de celles-ci, de sorte que l'élément profilé (20, 20.x) s'applique contre la plaque de montage (10, 10.x) parallèlement au repli (11, 11.x).

9. Procédé d'assemblage d'une ossature intégrée (100) selon la revendication 8,
**caractérisé en ce qu'**il comprend l'étape de procédé supplémentaire suivante :
(d') le câblage du respectivement au moins un dispositif électrique (300) des au moins deux modules de montage (1000) les uns aux autres.
